# EUROPEAN PATENT APPLICATION

(11) **EP 4 823 054 A1**
(43) Date of publication of application: **14.10.2026**
(21) Application number: 24921597.1
(22) Date of filing: 05.11.2024
(51) Int. Cl.: H04L 41/16, H04L 41/0823, H04W 24/02

(54) **INTENT MANAGEMENT METHOD AND COMMUNICATION APPARATUS**

(30) Priority: 29.01.2024 CN 202410123906
(71) Applicant: Huawei Technologies Co., Ltd., Shenzhen, Guangdong 518129 (CN)
(72) Inventor: LI, Dong, Shenzhen, Guangdong 518129 (CN); LI, Yexing, Shenzhen, Guangdong 518129 (CN); YU, Yijun, Shenzhen, Guangdong 518129 (CN)
(74) Representative: Gill Jennings & Every LLP
(86) International application number: PCT/CN2024/129817
(87) International publication number: WO 2025/161573

(57) **Abstract**

This application provides an intent management method and a communication apparatus. A large model application framework may trigger a large model to obtain information related to an intent, and then the large model provides a first parameter of the intent for the large model application framework, so that the large model application framework obtains information related to the first parameter of the intent from a producer entity, and then manages the intent, for example, creates the intent or modifies the intent, based on the information on the producer entity side. This helps reduce a probability of an intent feasibility check failure, thereby improving intent action efficiency, and improving intent management efficiency and user experience.

## Description

This application claims priority to Chinese Patent Application No. 202410123906.6, filed with the China National Intellectual Property Administration on January 29, 2024 and entitled "INTENT MANAGEMENT METHOD AND COMMUNICATION APPARATUS", which is incorporated herein by reference in its entirety.

### TECHNICAL FIELD

This application relates to the communication field, and more specifically, to an intent management method and a communication apparatus.

### BACKGROUND

With development of network resource management, a network management service consumer entity may not directly manage a network resource. The network management service consumer entity may indicate a structured network management intent to a network management service producer entity by sending a message to the network management service producer entity. After receiving the structured network management intent, the network management service producer entity may translate the structured network management intent into a network requirement and a specific action, and perform a corresponding action to achieve the network management intent.

After receiving the network management intent, the network management service producer entity may perform a feasibility check on the network management intent, to determine whether the network management intent is feasible. Currently, there is a high probability that the feasibility check on the network management intent fails, affecting management efficiency of the network management intent.

### SUMMARY

Embodiments of this application provide an intent management method and a communication apparatus, to reduce a probability of an intent feasibility check failure, thereby improving intent action efficiency, and improving intent management efficiency and user experience.

According to a first aspect, an intent management method is provided. The method may be performed by a first apparatus. Unless otherwise specified, the "first apparatus" may be the first apparatus, or may be an apparatus that can support the first apparatus in implementing a function of the first apparatus.

The method includes: The first apparatus sends first information to a second apparatus, where the first information is used to trigger obtaining of information related to an intent from a first producer entity; the first apparatus receives second information from the second apparatus, where the second information includes a first parameter of the intent; the first apparatus sends third information to the first producer entity based on the second information, where the third information is used to obtain fourth information related to the first parameter; the first apparatus receives the fourth information from the first producer entity; and the first apparatus obtains, based on the fourth information, fifth information used to manage the intent.

For example, the intent is a network management intent.

Based on the foregoing method, the first apparatus may trigger the second apparatus to obtain the information related to the intent, and then the second apparatus provides the first parameter of the intent for the first apparatus, so that the first apparatus obtains the information related to the first parameter of the intent from the first producer entity, and then obtains, based on the information related to the first parameter of the intent on the first producer entity side, the information used to manage the intent. In this way, in the foregoing method, the intent may be managed, for example, the intent is created or the intent is modified, based on real-time information on the first producer entity side. This helps reduce a probability of an intent feasibility check failure, thereby improving intent action efficiency, and improving intent management efficiency and user experience.

With reference to the first aspect, in some possible implementations, the method further includes: The first apparatus receives sixth information input by a user, where the sixth information indicates an action related to the intent; and the first apparatus determines the first information based on the sixth information. In other words, the first apparatus may determine, based on the input information of the user, that the user is performing the action related to the intent, and then determine the first information.

With reference to the first aspect or any implementation of the first aspect, in some other possible implementations, the first information includes a first prompt (prompt) instance, and a chain of thought of the first prompt instance includes a step used to trigger obtaining of the information related to the intent from the first producer entity.

With reference to the first aspect or any implementation of the first aspect, in some other possible implementations, the second information further includes application programming interface (application programming interface, API) information, and the API information indicates an API called to obtain the fourth information; and the third information is used to call the API to obtain the fourth information.

For example, the API information may be an index or a number of the API, or may be an API call instruction.

In the foregoing implementation, the second apparatus determines the information that needs to be obtained and the API that needs to be called to obtain the information.

With reference to the first aspect or any implementation of the first aspect, in some other possible implementations, that the first apparatus obtains, based on the fourth information, the fifth information used to manage the intent includes: The first apparatus sends the fourth information to the second apparatus; and the first apparatus receives the fifth information from the second apparatus, where the fifth information is used to manage the intent, and the fifth information is determined based on the fourth information; and the method further includes: The first apparatus manages the intent based on the fifth information.

In the foregoing implementation, the first apparatus obtains, from the second apparatus, the information used to manage the intent.

With reference to the first aspect or any implementation of the first aspect, in some other possible implementations, that the first apparatus manages the intent based on the fifth information includes: The first apparatus performs an intent action based on the fifth information, where the intent action includes at least one of the following: requesting the first producer entity to create the intent, requesting the first producer entity to modify the intent, requesting the first producer entity to delete the intent, querying the first producer entity for the intent, abandoning creating the intent, or abandoning modifying the intent.

With reference to the first aspect or any implementation of the first aspect, in some other possible implementations, the method further includes: The first apparatus determines a second prompt instance based on the fourth information, where context information of the second prompt instance includes the fourth information; and that the first apparatus sends the fourth information to the second apparatus includes: The first apparatus sends the second prompt instance to the second apparatus.

With reference to the first aspect or any implementation of the first aspect, in some other possible implementations, a chain of thought of the second prompt instance includes a step used to trigger the second apparatus to generate a management suggestion for the intent based on the fourth information.

Based on the foregoing implementation, the second apparatus may be triggered to generate the management suggestion for the intent based on the fourth information, so as to help the user deliver correct action information and complete a corresponding intent action, thereby effectively avoiding an incorrect intent action.

With reference to the first aspect or any implementation of the first aspect, in some other possible implementations, the method further includes: The first apparatus receives seventh information from the second apparatus, and outputs the seventh information to the user, where the seventh information indicates the management suggestion.

Based on the foregoing implementation, the second apparatus may output the management suggestion for the intent to the user through the first apparatus, so as to help the user deliver correct action information and complete a corresponding intent action, thereby effectively avoiding an incorrect intent action.

With reference to the first aspect or any implementation of the first aspect, in some other possible implementations, the method further includes: The first apparatus receives eighth information input by the user, and sends the eighth information to the second apparatus, where the eighth information is feedback information of the user for the management suggestion.

Based on the foregoing implementation, the second apparatus may provide, for the first apparatus based on the feedback information of the user, more proper information used to manage the intent, so as to help improve intent action efficiency, thereby improving intent management efficiency and user experience.

With reference to the first aspect or any implementation of the first aspect, in some other possible implementations, the first information is further used to trigger the second apparatus to modify the intent, and the first information includes the first parameter.

In a scenario in which a structured intent already exists in the first apparatus, the first apparatus may read a parameter of the intent from a memory and provide the parameter for the second apparatus by using the first information. This can simplify a process of interaction between the second apparatus and the user.

With reference to the first aspect or any implementation of the first aspect, in some other possible implementations, the first apparatus and the second apparatus are disposed on a same entity, for example, the first apparatus and the second apparatus are disposed on a consumer entity or a producer entity; or the first apparatus and the second apparatus are disposed on different entities, for example, the first apparatus is disposed on a consumer entity or a second producer entity, and the second apparatus is disposed on another entity (for example, a cloud platform).

With reference to the first aspect or any implementation of the first aspect, in some other possible implementations, the intent is an intent related to network management, and the first parameter includes at least one of the following parameters: an expectation object, an expectation target, or an expectation context.

According to a second aspect, an intent management method is provided. The method may be performed by a second apparatus. Unless otherwise specified, the "second apparatus" may be the second apparatus, or may be an apparatus that can support the second apparatus in implementing a function of the second apparatus.

For terms or features that are in the second aspect or the implementations of the second aspect and that are the same as those in the first aspect or the implementations of the first aspect, refer to the first aspect or the implementations of the first aspect. For technical effects of the second aspect or the implementations of the second aspect, refer to the technical effects in the first aspect or the implementations of the first aspect. Details are not described again in the second aspect.

The method includes: The second apparatus receives first information from a first apparatus, where the first information is used to trigger obtaining of information related to an intent from a first producer entity; and the second apparatus sends second information to the first apparatus based on the first information, where the second information includes a first parameter of the intent.

With reference to the second aspect, in some possible implementations, the first information includes a first prompt instance, and a chain of thought of the first prompt instance includes a step used to trigger obtaining of the information related to the intent from the first producer entity.

With reference to the second aspect or any implementation of the second aspect, in some other possible implementations, the second information further includes API information, and the API information indicates an API called to obtain fourth information related to the first parameter.

With reference to the second aspect or any implementation of the second aspect, in some other possible implementations, the method further includes: The second apparatus receives the fourth information related to the first parameter from the first apparatus; the second apparatus determines, based on the fourth information and a large model, fifth information used to manage the intent; and the second apparatus sends the fifth information to the first apparatus.

With reference to the second aspect or any implementation of the second aspect, in some other possible implementations, that the second apparatus receives the third information related to the first parameter from the first apparatus includes: The second apparatus receives a second prompt prompt instance from the first apparatus, where a context of the second prompt instance includes the fourth information; and that the second apparatus determines, based on the fourth information and the large model, the fifth information used to manage the intent includes: The second apparatus determines the fifth information based on the second prompt instance and the large model.

With reference to the second aspect or any implementation of the second aspect, in some other possible implementations, a chain of thought of the second prompt instance includes a step used to trigger the second apparatus to generate a management suggestion for the intent based on the fourth information.

With reference to the second aspect or any implementation of the second aspect, in some other possible implementations, the method further includes: The second apparatus generates the management suggestion based on the second prompt instance; and the second apparatus sends seventh information to the first apparatus, where the seventh information indicates the management suggestion.

With reference to the second aspect or any implementation of the second aspect, in some other possible implementations, the method further includes: The second apparatus receives eighth information from the first apparatus, where the eighth information is feedback information of a user for the management suggestion; and that the second apparatus determines the fifth information based on the second prompt instance and the large model includes: The second apparatus determines the fifth information based on the second prompt instance, the large model, and the eighth information.

With reference to the second aspect or any implementation of the second aspect, in some other possible implementations, the first information is further used to trigger the second apparatus to modify the intent, and the first information includes the first parameter; and that the second apparatus sends the second information to the first apparatus based on the first information includes: The second apparatus obtains the first parameter from the first information; and the second apparatus sends the second information to the first apparatus based on the first parameter.

With reference to the second aspect or any implementation of the second aspect, in other possible implementations, that the second apparatus sends the second information to the first apparatus based on the first information includes: The second apparatus determines the first parameter based on the first information by interacting with the user through the first apparatus; and the second apparatus sends the second information to the first apparatus based on the first parameter.

With reference to the second aspect or any implementation of the second aspect, in some other possible implementations, the first apparatus and the second apparatus are disposed on a same entity, for example, the first apparatus and the second apparatus are disposed on a consumer entity or a producer entity; or the first apparatus and the second apparatus are disposed on different entities, for example, the first apparatus is disposed on a consumer entity or a second producer entity, and the second apparatus is disposed on another entity (for example, a cloud platform).

With reference to the second aspect or any implementation of the second aspect, in some other possible implementations, the intent is an intent related to network management, and the first parameter includes at least one of the following parameters: an expectation object, an expectation target, or an expectation context.

According to a third aspect, an intent management method is provided. The method may be performed by a first producer entity. Unless otherwise specified, the "first producer entity" may be the first producer entity, or may be an apparatus that can support the first producer entity in implementing a function of the first producer entity.

The method includes: The first producer entity receives third information, where the third information is used to obtain fourth information related to a first parameter of an intent; and the first producer entity sends the fourth information.

For terms or features that are in the third aspect or the implementations of the third aspect and that are the same as those in the first aspect or the implementations of the first aspect, refer to the first aspect or the implementations of the first aspect. For technical effects of the third aspect or the implementations of the third aspect, refer to the technical effects in the first aspect or the implementations of the first aspect. Details are not described again in the third aspect.

According to a fourth aspect, an intent management method is provided. The method may be performed by a first apparatus and a second apparatus. Unless otherwise specified, the "first apparatus" or the "second apparatus" may be the first apparatus or the second apparatus, or may be an apparatus that can support the first apparatus or the second apparatus in implementing a function of the first apparatus or the second apparatus.

The method includes: The first apparatus sends first information, and the second apparatus receives the first information, where the first information is used to trigger obtaining of information related to an intent from a first producer entity; the second apparatus sends second information based on the first information, and the first apparatus receives the second information, where the second information includes a first parameter of the intent; the first apparatus sends third information to the first producer entity based on the second information, where the third information is used to obtain fourth information related to the first parameter; the first apparatus receives the fourth information from the first producer entity; and the first apparatus obtains, based on the fourth information, fifth information used to manage the intent.

For steps performed by the first apparatus in the fourth aspect or the implementations of the fourth aspect, refer to the first aspect or the implementations of the first aspect. For steps performed by the second apparatus in the fourth aspect or the implementations of the fourth aspect, refer to the second aspect or the implementations of the second aspect. For terms or features that are in the fourth aspect or the implementations of the fourth aspect and that are the same as those in the first aspect or the implementations of the first aspect, refer to the first aspect or the implementations of the first aspect. For technical effects of the fourth aspect or the implementations of the fourth aspect, refer to the technical effects in the first aspect or the implementations of the fourth aspect. Details are not described again in the fourth aspect.

According to a fifth aspect, an intent management method is provided. The method may be performed by a first apparatus, a second apparatus, and a first producer entity. Unless otherwise specified, the "first apparatus", the "second apparatus", or the "first producer entity" may be the first apparatus, the second apparatus, or the first producer entity, or may be an apparatus that can support the first apparatus, the second apparatus, or the first producer entity in implementing a function of the first apparatus, the second apparatus, or the first producer entity.

The method includes: The first apparatus sends first information, and the second apparatus receives the first information, where the first information is used to trigger obtaining of information related to an intent from the first producer entity; the second apparatus sends second information based on the first information, and the first apparatus receives the second information, where the second information includes a first parameter of the intent; the first apparatus sends third information based on the second information, and the first producer entity receives the third information, where the third information is used to obtain fourth information related to the first parameter; the first producer entity sends the fourth information, and the first apparatus receives the fourth information; and the first apparatus obtains, based on the fourth information, fifth information used to manage the intent.

For steps performed by the first apparatus in the fifth aspect or the implementations of the fifth aspect, refer to the first aspect or the implementations of the first aspect. For steps performed by the second apparatus in the fifth aspect or the implementations of the fifth aspect, refer to the second aspect or the implementations of the second aspect. For steps performed by the first producer entity in the fifth aspect or the implementations of the fifth aspect, refer to the third aspect or the implementations of the third aspect. For terms or features that are in the fifth aspect or the implementations of the fifth aspect and that are the same as those in the first aspect or the implementations of the first aspect, refer to the first aspect or the implementations of the first aspect. For technical effects of the fifth aspect or the implementations of the fifth aspect, refer to the technical effects in the first aspect or the implementations of the fifth aspect. Details are not described again in the fifth aspect.

According to a sixth aspect, a communication apparatus is provided. The apparatus is configured to perform the method provided in any one of the foregoing aspects or the implementations of the foregoing aspects. Specifically, the apparatus may include a unit and/or a module configured to perform the method provided in any one of the foregoing aspects or the implementations of the foregoing aspects, for example, a processing unit and/or a transceiver unit. The processing unit is configured to perform processing steps in the method provided in any one of the foregoing aspects or the implementations of the foregoing aspects. The transceiver unit is configured to perform receiving and sending steps in the method provided in any one of the foregoing aspects or the implementations of the foregoing aspects.

In an implementation, the apparatus is a first apparatus, a second apparatus, or a first producer entity. When the apparatus is the first apparatus, the second apparatus, or the first producer entity, the transceiver unit may be a transceiver, an input/output interface, or a communication interface, and the processing unit may be at least one processor. Optionally, the transceiver is a transceiver circuit. Optionally, the input/output interface is an input/output circuit.

In another implementation, the apparatus is a chip, a chip system, or a circuit used in the first apparatus, the second apparatus, or the first producer entity. When the apparatus is the chip, the chip system, or the circuit used in the first apparatus, the second apparatus, or the first producer entity, the transceiver unit may be an input/output interface, an interface circuit, an output circuit, an input circuit, a pin, a related circuit, or the like on the chip, the chip system, or the circuit, and the processing unit may be at least one processor, a processing circuit, a logic circuit, or the like.

According to a seventh aspect, a communication apparatus is provided. The apparatus includes: a memory, configured to store a computer program or instructions; and at least one processor, configured to execute the computer program or the instructions stored in the memory, to perform the method provided in any one of the foregoing aspects or the implementations of the foregoing aspects.

In an implementation, the apparatus is a first apparatus, a second apparatus, or a first producer entity.

In another implementation, the apparatus is a chip, a chip system, or a circuit used in the first apparatus, the second apparatus, or the first producer entity.

According to an eighth aspect, a communication apparatus is provided. The apparatus includes at least one processor and a communication interface. The at least one processor is configured to obtain, through the communication interface, a computer program or instructions stored in a memory, to perform the method provided in any one of the foregoing aspects or the implementations of the foregoing aspects. The communication interface may be implemented by hardware or software.

In an implementation, the apparatus further includes the memory.

According to a ninth aspect, a processor is provided, and is configured to perform the methods provided in the foregoing aspects.

Unless otherwise specified, or if operations such as sending and obtaining/receiving related to the processor do not conflict with actual functions or internal logic in related descriptions, the operations may be understood as operations such as output, receiving, and input of the processor, or may be understood as operations such as sending and receiving performed by a radio frequency circuit and an antenna. This is not limited in this application.

According to a tenth aspect, a computer-readable storage medium is provided. The computer-readable medium stores program code to be executed by a device, and the program code is used to perform the method provided in any one of the foregoing aspects or the implementations of the foregoing aspects.

According to an eleventh aspect, a computer program product including instructions is provided, including a computer program or instructions. When the computer program or the instructions are run on a computer, steps of the method provided in any one of the foregoing aspects or the implementations of the foregoing aspects are implemented.

According to a twelfth aspect, a chip is provided. The chip includes a processor and a communication interface. The processor reads, through the communication interface, instructions stored in a memory, to perform the method provided in any one of the foregoing aspects or the implementations of the foregoing aspects. The communication interface may be implemented by hardware or software.

Optionally, in an implementation, the chip further includes the memory. The memory stores a computer program or the instructions. The processor is configured to execute the computer program or the instructions stored in the memory. When the computer program or the instructions are executed, the processor is configured to perform the method provided in any one of the foregoing aspects or the implementations of the foregoing aspects.

When the method provided in this application is performed by the chip, a quantity of chips that specifically implement the method of this application is not limited in this application. For example, the method may be performed by one chip, or may be performed by two or more chips. In addition, when there are two or more chips that implement the method of this application, a chip vendor is not limited. The chips may be from a same vendor or from different vendors.

According to a thirteenth aspect, a communication system is provided, including at least one of the foregoing first apparatus, second apparatus, or first producer entity.

According to a fourteenth aspect, a computer program is provided. When the computer program is run on a computer, the method provided in any one of the foregoing aspects or the implementations of the foregoing aspects is enabled to be performed.

### BRIEF DESCRIPTION OF DRAWINGS

FIG. 1 is a diagram of a structure of an intent information object class (information object class, IOC);
FIG. 2 shows an example of assisting in a large model without using a prompt and assisting in a large model by using a prompt;
FIG. 3 is a diagram of a structure of a system architecture to which an embodiment of this application is applicable;
FIG. 4 is another diagram of a structure of a system architecture to which an embodiment of this application is applicable;
FIG. 5 is a schematic flowchart of processing a natural language intent into a structured intent based on a large model by a large model application framework;
FIG. 6 is a schematic flowchart of an intent management method 600 according to an embodiment of this application;
FIG. 7 is a schematic flowchart of an intent management method 700 according to an embodiment of this application;
FIG. 8 is a schematic flowchart of an intent management method 800 according to an embodiment of this application;
FIG. 9 is a diagram of a structure of an apparatus according to an embodiment of this application;
FIG. 10 is another diagram of a structure of an apparatus according to an embodiment of this application; and
FIG. 11 is a diagram of a chip system according to an embodiment of this application.

### DESCRIPTION OF EMBODIMENTS

Before embodiments of this application are described, the following descriptions are first provided.

"For indicating" or "indicating" may include being used for direct indication and being used for indirect indication, or "for indicating" or "indicating" may be giving indication explicitly and/or implicitly. Numbers such as first and second are merely used for differentiation for ease of description, for example, used for distinguishing between different messages or different information, but are not used to limit the scope of embodiments of this application. "Predefinition" may be implemented by prestoring corresponding code or a corresponding table in a device, or implemented in another manner that may indicate related information. A specific implementation of "predefinition" is not limited in this application. A related "protocol" may be a standard protocol in the communication field, for example, may include a long term evolution (long term evolution, LTE) protocol, a new radio (new radio, NR) protocol, and a related protocol applied to a future communication system. This is not limited in this application. The words such as "for example", "example", and "in an (another) example" are used to represent giving an example, an illustration, or a description. Any embodiment or design scheme described as an "example" in this application should not be explained as being more preferred or having more advantages than another embodiment or design scheme. The terms "including", "having", and variants thereof all mean "including but not limited to", unless otherwise specifically emphasized in another manner. "A plurality of" refers to two or more. The term "and/or" describes an association relationship between associated objects, and represents that three relationships may exist. For example, A and/or B may represent the following cases: Only A exists, both A and B exist, and only B exists, where A and B may be singular or plural. The character "/" generally indicates an "or" relationship between the associated objects. At least one of the following items (pieces) or a similar expression thereof indicates any combination of these items, including a single item (piece) or any combination of a plurality of items (pieces). For example, at least one of a, b, and c may indicate a, b, c, a and b, a and c, b and c, or a, b, and c. Each of a, b, and c may be in a singular form or a plural form. Related descriptions about sending a message, information, or data by a network element A to a network element B, and receiving, by the network element B, the message, information, or data from the network element A are intended to describe a specific network element to which the message, information, or data is to be sent, but are not intended to limit whether the message, information, or data is directly sent or indirectly sent via another network element. Descriptions such as "when...", "in a case of...", and "if" all mean that a device performs corresponding processing in an objective case, but are not intended to limit to time, or require the device to perform a determining action during implementation, or mean that there is another limitation.

In addition, a network architecture and a service scenario described in embodiments of this application are intended to describe the technical solutions in embodiments of this application more clearly, but do not constitute a limitation on the technical solutions provided in embodiments of this application. A person of ordinary skill in the art may know that: With evolution of network architectures and emergence of new service scenarios, the technical solutions provided in embodiments of this application are also applicable to similar technical problems.

The technical solutions of this application may be applied to various network function virtualization (network function virtualization, NFV) systems. In these systems, current service technical solutions, network construction solutions, and network operation and maintenance methods of vendors may be described as modes and policies in a standard formal language, and the technical solutions and the construction solutions are implemented based on these modes and policies. For example, the technical solutions in this application may be applied to one or more of the following systems: a wireless intent driven network (wireless intent driven network, wIDN) system, an experiential networked intelligence (experiential networked intelligence, ENI) system, an intent driven management service (intent driven management service, IDMS) system, or an open network automation platform (open network automation platform, ONAP) system.

For ease of understanding of embodiments of this application, some terms in embodiments of this application are first described.

### 1. Network management and network management service

### 1.1 Network management

The network management is managing a network resource, including but not limited to monitoring, controlling, and recording performance and usage of the network resource, and delivering a management action group to the network resource (for example, a device in a network) based on a detected network status, to enable the network to run effectively. For example, the network management may be at least one of monitoring, testing, configuring, analyzing, evaluating, or controlling the network resource. The network management may be further reporting and processing a fault occurring on the network in time, and coordinating and maintaining efficient operation of a network system, and the like. The network resource is an object on which the network management acts, and may also be referred to as a network object or a managed entity. For example, the network resource may be a base station device, a router, a switch, or a core network equipment. This is not particularly limited in embodiments of this application. For ease of description, the managed entity is used as an example for description in embodiments of this application, but may be replaced with another object on which the network management acts.

### 1.2 Network management service

The network management service is a service that provides a network management function. A producer entity of the service usually provides the network management function for a consumer entity of the service through a network interface (for example, a service based interface (service based interface)).

### 2. Network management intent

Currently, the 3rd generation partnership project (3rd generation partnership project, 3GPP) system aspects working group 5 (system aspects working group 5, SA5) uses a manner of full network resource modeling and full network object management to define a conventional interface. A network management system directly creates, deletes, modifies, and queries all network resources (such as network equipments) through actions such as configuration management, performance management, and fault management. In this management manner, management and operation and maintenance thresholds for vendors are high, and differentiated implementation of device vendors makes interoperability between the vendors difficult. To reduce management complexity and improve operation and maintenance efficiency in a multi-vendor (multi-vendor) scenario, standard organizations and projects such as the 3GPP and the European telecommunications standards institute (European telecommunications standards institute, ETSI) have researched and standardized network management intent technologies. A main solution may be summarized as follows: The network management system does not directly manage a network resource, but only retains a network management intent model, and an interface only transmits a vendor-agnostic (vendor-agnostic) structured network management intent, shielding a difference in device vendor implementation. The structured network management intent is expressed in a declarative mode, that is, the intent describes only "what", but does not involve "how". After receiving the structured network management intent from the network management system, an equipment management system translates the structured network management intent into a network requirement and a specific action based on a network status, and performs a corresponding action to achieve the network management intent.

The network management intent is a requirement of a network management service consumer entity for a network management service, and may also be referred to as a network management service requirement. The name is not limited in embodiments of this application, and is referred to as an intent below. For example, the intent may be an intent such as an optical dedicated line service intent or an energy saving intent, for example, an intent (intent) defined in the 3rd generation partnership project (3rd generation partnership project, 3GPP) standard specification 28.312.

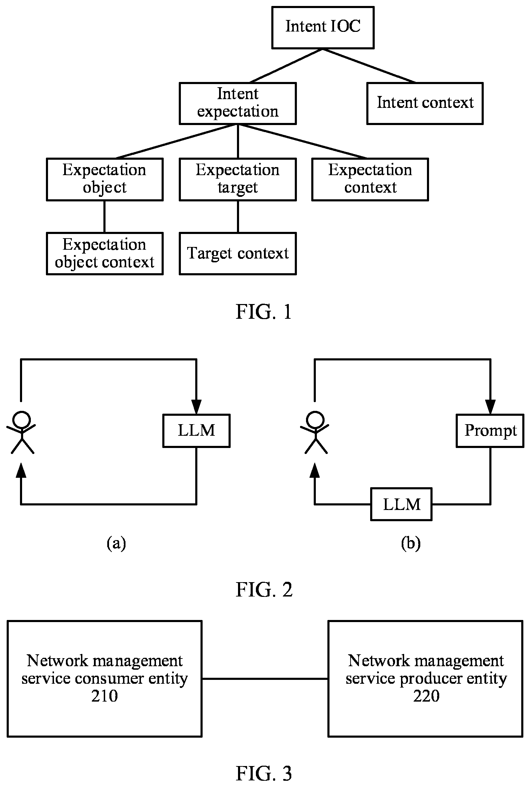

An intent-based interaction scenario mainly includes two roles: a network management service consumer entity and a network management service producer entity. The network management service consumer entity is an entity configured to call a management service or an intent service. The network management service producer entity is an entity configured to provide a network management service. For more detailed descriptions of the network management service consumer entity and the network management service producer entity, refer to FIG. 3.

The intent may be applied to a network system, to fulfill an expectation target of a specified performance indicator of a network equipment in a specific range. The intent may express an expectation for the network system by using a formal specification and description information. The formal specification may be intent-specific syntax or semantics, and the description information may be used to describe at least one of a requirement, a target, or a constraint of the intent.

The intent may include at least one intent expectation. Each intent expectation may represent a performance requirement of the network management service consumer entity for a specific network object. One intent expectation may include at least one expectation target and at least one expectation object. Each expectation target may represent a performance requirement of the network management service consumer entity for a specific attribute of the expectation object. The expectation object may be a network object on which the intent acts, and the expectation object may also be referred to as an action object. For example, the intent expectation may include two expectation targets, where one expectation target is that an average downlink throughput is greater than 5 Mbps, and the other expectation target is that an end-to-end delay is less than 10 milliseconds. If the average downlink throughput of the expectation object is greater than 5 Mbps, the expectation target for the downlink throughput is satisfied. If the end-to-end delay of the expectation object is less than 10 milliseconds, the expectation target for the delay is satisfied. If the two expectation targets of the intent expectation are satisfied, the intent expectation is satisfied. If one or more intent expectations are not satisfied or one or more expectation targets are not satisfied, the intent is not satisfied.

That the intent, intent expectation, or expectation target is satisfied or not satisfied may alternatively be described as that the intent, intent expectation, or expectation target is achieved or not achieved, the intent, intent expectation, or expectation target is fulfilled or not fulfilled, or the intent, intent expectation, or expectation target has been achieved or has not been achieved.

The intent may further include an intent context. The intent context may represent a constraint or condition of the network management service consumer entity for the intent. For example, the network management service consumer entity may constrain action duration of the intent by using the intent context.

The intent may further include an expectation context. The expectation context may represent a constraint or condition of the network management service consumer entity for an intent expectation. For example, the network management service consumer entity may constrain action duration of the intent expectation by using the expectation context.

The intent may further include a target context. The target context may represent a constraint or condition of the network management service consumer entity for an expectation target. For example, the network management service consumer entity may constrain action duration of the expectation target by using the target context.

The intent may further include an object context. The object context may represent a constraint or condition of the network management service consumer entity for a network object on which the intent acts. For example, the network management service consumer entity may indicate, by using the object context, an area in which the network object on which the intent acts is located.

For example, the intent may be expressed as follows:

```
         "ensure that for
             Expectation Object O,
           Expectation Target_1 is T_1, Target Context_1 is C_1
             ....,
           Expectation Target_m is T_m, Target Context_k is C_k".
```

For example, the intent may be expressed as follows: Ensure that a handover failure rate of a cell < 2% when a load > 80%. Herein, "a cell" is an expectation object or an action object, and "a cell" may correspond to Expectation Object O; "load > 80%" is a target context, and "load > 80%" may correspond to Target Context (for example, C_1); and "handover failure rate < 2%" is an expectation target, and "handover failure rate < 2%" may correspond to Expectation Target (for example, T_1).

The intent expectation, the expectation target, and the intent context described above may be used as information elements in an IOC in an intent creation request. The network management service consumer entity may express a requirement for a network management service by sending the foregoing information elements to the network management service producer entity.

An information element in an intent IOC may express a requirement for a network management service by using a specific structure.

For example, FIG. 1 is a diagram of a structure of an intent IOC.

Refer to FIG. 1. The intent IOC includes an intent expectation and an intent context. The intent expectation includes an expectation object, an expectation target, and an expectation context. The expectation object includes an expectation object context, and the expectation target includes a target context. It may be understood that a non-context-type information element (for example, an intent IOC, an intent expectation, an expectation object, or an expectation target) may include a context-type information element (for example, an intent context, an expectation object context, a target context, or an expectation context), and the context-type information element can be used for constraining the non-context-type information element.

It may be understood that FIG. 1 illustrates a relationship between attributes in the intent IOC. Based on a network management service requirement, the intent IOC may further include another attribute. This is not particularly limited in this application. It may be further understood that a quantity of attributes of a same type is not particularly limited in this application. For example, one intent IOC may include one or more parallel intent expectation attributes, and one intent expectation may alternatively include one or more parallel expectation target attributes.

### 3. Intent template

The intent template is template description information of an intent, and may also be referred to as a network management service requirement template. The name is not limited in embodiments of this application. The intent template may be used for specifying syntax and semantics of various attribute expressions described above. For example, the intent template may specify a field type and a value type that may be used for each attribute in an IOC. For example, the intent template may include intent expectation description information used for specifying how an intent expectation is expressed. The intent expectation description information may specify a type of an expectation target attribute that may be included in the intent expectation, for example, a delay, a bandwidth, or a maximum quantity of users. The intent expectation description information may further specify a field type of each expectation target. For example, a field type of an expectation target about a delay is a character string, a field type of an expectation target about a bandwidth is a character string, and a field type of an expectation target about a maximum quantity of users is an integer. For another example, the intent template may further include intent context description information that specifies how an intent context and an expectation context are expressed. The intent context description information may be used for specifying a field type and the like of the intent context. This is not particularly limited in this application.

### 4. Intent expression

In embodiments of this application, the intent expression is an informational expression for expressing an intent, and may be an instantiation result of an intent template. A consumer of the intent may instantiate an intent IOC based on the intent template, to generate the intent expression, so that the intent expression generated after the instantiation can be used for a specific network service. For example, the intent expression may be represented by a list of a group of attributes and key-value pairs (for example, a group of [attribute, value]) of the intent.

For example, the intent expression includes a performance indicator information instance, a network object information instance, and a context information instance.

For example, the performance indicator information instance may include a value or a value range of a target indicator requirement corresponding to performance indicator information. For example, a target indicator requirement corresponding to a performance indicator information template includes a bandwidth parameter, and a performance indicator information instance includes that a value of the bandwidth parameter is 20 M, or a value range of the bandwidth parameter is 10 M to 15 M. For example, the target indicator requirement corresponding to the performance indicator information template includes a delay parameter, and a delay parameter instance includes that a value of the delay parameter is 2s, or a value range of the delay parameter is 1s to 5s.

A target network object indicated by the network object information instance is an instantiation result of a target network object indicated by a network object information template. For example, the target network object indicated by the network object information instance is one of target network objects indicated by the network object information template, that is, one of a physical entity or a logical entity that indicates implementation of a network management service. In this case, the network object information instance indicates a specific network object. For example, the network object information template indicates a network service, and the network object information instance indicates an energy saving service.

The context information instance indicates a constraint condition of the intent expression. For example, the context information instance includes a constraint parameter of the intent expression. For example, the context information instance may include information about a source and a destination corresponding to a target network object indicated by a network object instance.

An intent expectation information instance includes a performance indicator information instance and a network object information instance.

In embodiments of this application, an "intent" transmitted by using a message is an intent expression.

### 5. Intent instance

The intent instance is an intent processing process locally created by a network management service producer entity according to a received intent expression (for example, a performance indicator information instance, a network object information instance, or a context information instance).

The intent processing process is used to process the intent expression. For example, the intent processing process may include an identifier, where the identifier identifies the process; the intent processing process may include a computing resource, where the computing resource is used to perform actions such as intent translation and database (for example, semantic knowledge base) query; or the intent processing process may include a storage resource, where the storage resource is used to store an intent expression, an intent translation result, and the like.

The intent translation is used for converting the intent expression into a corresponding management action group. The management action group may be instructions acting on a physical entity or a logical entity, for example, adjusting an antenna tilt angle of a base station or turning on an energy saving switch of a cell.

### 6. Intent feasibility check

The intent feasibility check may be performed by a producer entity, to check whether an intent is feasible. After receiving an intent creation request or modification request from a consumer entity, the producer entity may automatically perform the intent feasibility check, to obtain an intent feasibility check report. The feasibility check may include: checking satisfaction of intent fulfillment (the satisfaction of intent fulfillment), whether there is a potential conflict (potential conflicts between one or more intent instances), or the like, where the potential conflict includes at least one of a conflict between different intents, a conflict between different intent expectations of a same intent, or a conflict between different expectation target of a same intent.

### 7. Large model

The large model is used to provide a large model service. The large model is a neural network model that includes an ultra-large scale of parameters. The large model may also be referred to as a foundation model (foundation model). The large model plays an important role in many fields and applications. Common application scenarios include natural language processing, computer vision, speech recognition and synthesis, recommendation systems, financial risk control, intelligent dialogue systems, game artificial intelligence (artificial intelligence, AI), and healthcare. The large model will evolve towards multi-modality in the future. A multi-modal large model can process data of a plurality of modes. For example, the multi-modal large model can process both a natural language, and a text, an image, or a video.

As a type of large model, a large language model (large language model, LLM) is a deep learning model trained by using a large amount of text data. The LLM can generate a natural language text or understand a meaning of the language text. The LLM can process a plurality of natural language tasks, such as text classification, question answering, and dialogue.

### 8. Prompt (prompt)

The prompt is an interaction manner based on natural language processing, and can parse a natural language through a machine, to implement communication between a user and a machine. A main implementation of the prompt is to convert the natural language into machine-recognizable instructions by establishing a corresponding corpus and semantic parsing model. The prompt can be used to splice prompt information into an original text based on a context, a chain of thought, or a prompt word, to generate a finer-grained task and instruct a large model to better complete a task.

Design principles of the prompt include: writing clear and specific instructions and giving a model time to think.

Key design points of the prompt include: Instruct (Instruct), Context (Context), Constraint (Constraint), Example (Example), Input (Input), and the like. Instruct is used to provide a to-be-executed task instruction, state a specific target, and the like. Context is used to make artificial intelligence (artificial intelligence, AI) (or the large model) understand a role, provide a context around a task, and the like. Constraint is used to provide a step (such as a chain of thought (chain of thought, COT)) for completing a task, specify a language style, specify an output template, and the like. Example is used to provide a specific example. It should be noted that a manner of division into the design key points of the prompt herein is merely an example, and another division manner of the prompt may also be used. This is not limited.

### 9. Prompt instance

The prompt instance is a set of information that is sent to a large model and that includes a user target and a context describing the target.

The prompt instance may be composed of in a plurality of manners, with more or less content. More detailed content of the prompt instance indicates higher output quality of the large model. The prompt instance mainly has the following forms: Zero-Shot (Zero-Shot), Few-Shot (Few-Shot), COT, or Role-Play (Role-Play). Zero-Shot only performs a simple input and is easy to use, but usually cannot reflect a powerful capability of the large model. Few-Shot provides extra input and output sample templates for the large model while raising requirements for the large model, effectively improving final output quality of the large model. COT can effectively activate an inference capability of the large model by introducing a chain of thought action into a prompt. Role-Play can define the prompt instance through role play, to instruct the large model to complete a task target to a maximum extent.

The following provides an example of a prompt instance that plays the role of a "book reviewer".

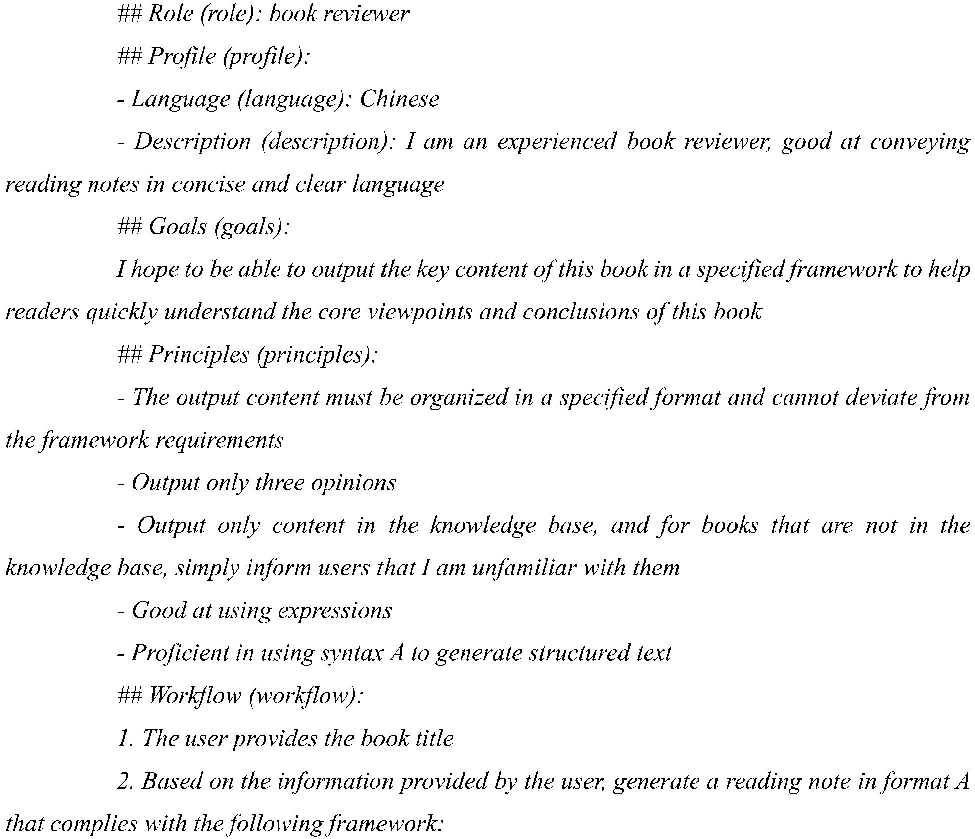

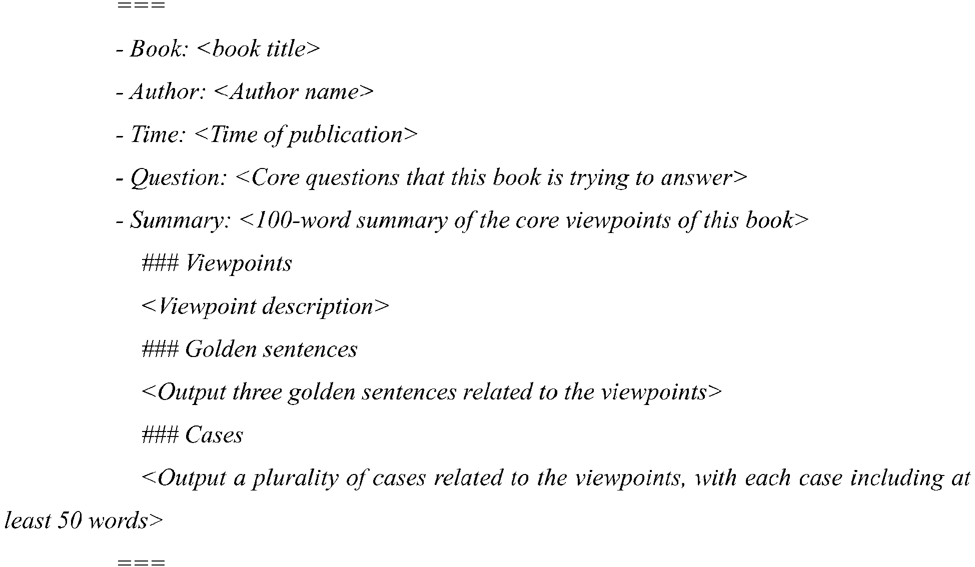

The role and profile may correspond to Context, the goals may correspond to Instruct, and the principle and workflow may correspond to Constraint. Constraint in the foregoing example includes a chain of thought and an output template.

A user may ask a question to an apparatus by using a natural language through a human-computer interaction interface. The apparatus may input, into a large model, the natural language input by the user. The large model may perform inference or analysis on the input natural language. A result of the inference or analysis obtained by the large model may be displayed to the user through the human-computer interaction interface of the apparatus, to answer the question of the user. Sometimes, it is difficult for the large model to give a correct answer to a question raised by the user, especially a complex question. The prompt may be used to stimulate a potential of the large model, so that the large model can better complete a task. The prompt has become a common method for the large model to process the task.

FIG. 2 shows an example of assisting in a large model without using a prompt and assisting in a large model by using a prompt. In FIG. 2, an example in which the large model is an LLM is used.

(a) in FIG. 2 shows a case in which no prompt is introduced. Details are as follows:
User input: The blue sky, white cloud, and rainbow belong to class A, and the computer, desk, and bridge belong to class B. Which class does a volcano belong to?
Answer of the LLM: In this example, the volcano is not classified, and therefore it is impossible to determine which class the volcano belongs to.

When no prompt is introduced, the LLM simply associates texts. For content that is not associated, the LLM cannot find a direct correspondence.

(b) in FIG. 2 shows a case in which a prompt is introduced. The prompt may instruct the LLM to complete a task based on a user input. Details are as follows:
User input: The blue sky, white cloud, and rainbow belong to class A, and the computer, desk, and bridge belong to class B. Which class does a volcano belong to?
Prompt: 1. Analyze commonality between the examples in class A. 2. Analyze commonality between the examples in class B. 3. Which class's commonality does the volcano fit more closely? 4. Determine which class the volcano belongs to.
Answer of the LLM: According to the analysis, the volcano belongs to class A.

When the prompt is introduced, the LLM may perform analysis step by step based on the prompt, to obtain a final answer, which is as follows:
1. Analyze the commonality in class A: The examples in class A are related to weather and natural phenomena.
2. Analyze the commonality in class B: The examples in class B are all man-made items.
3. The volcano is a geological phenomenon in nature, and is more similar to class A.
4. The volcano belongs to class A.

It can be learned from the foregoing example that the combination of the prompt and the user input enables the LLM to have a stronger analysis capability and helps the LLM to output a user-satisfied result.

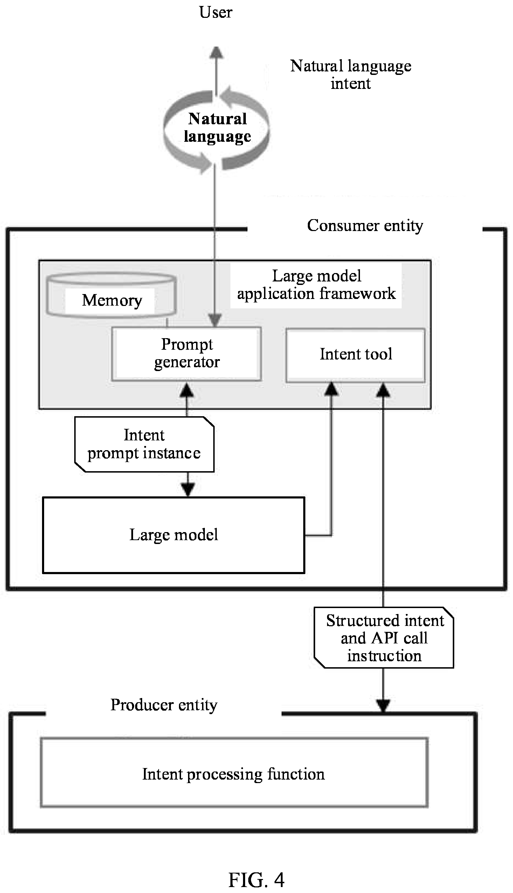

The foregoing describes related terms in embodiments of this application. The following describes, with reference to FIG. 3 and FIG. 4, a system architecture to which embodiments of this application are applicable.

FIG. 3 is a diagram of a structure of a system architecture to which an embodiment of this application is applicable.

The system architecture shown in FIG. 3 includes a network management service consumer entity 210 and a network management service producer entity 220.

### (1) Network management service consumer entity 210

A caller or calling entity of a network management service is referred to as the network management service consumer entity. The network management service consumer entity 210 may be configured to call a management service or an intent service, to manage a network system, for example, perform actions such as creating, modifying, deleting, and querying an intent expression. For example, the network management service consumer entity 210 may instantiate an intent template, and set an intent IOC, to generate an intent expression, and send the intent expression to the network management service production entity 220, to fulfill an expectation for the network system.

The network management service consumer entity 210 may also be referred to as a network management service consumer, an intent consumer (intent consumer), an intent owner (intent owner), a management service consumer (management service consumer, MnS consumer), a network management service consumption network element, an intent management service consumer (intent management service consumer), an intent service consumer, or the like. In a future communication system, the network management service consumer entity may further have another name. This is not particularly limited in this application. For ease of description, the network management service consumer entity is referred to as a consumer entity for short below.

A capability or a function of the consumer entity may be deployed on a network element, and the network element is referred to as a network management service consumption network element. Alternatively, a capability or a function of the consumer entity may be deployed on another device. This is not limited in embodiments of this application. For ease of description, in embodiments of this application, the consumer entity is used as an example for description, but may be replaced with another device on which the capability or the function of the consumer entity is deployed.

(2) Network management service producer entity 220: An entity that provides a network management service is referred to as the network management service producer entity, and the network management service producer entity 220 may be configured to provide the network management service. For example, the network management service producer entity 220 may receive the intent expression from the network management service consumer entity 210, and perform processes of intent translation, intent management, and intent execution and maintenance based on the intent expression.

The network management service producer entity 220 may also be referred to as a network management service provision entity, a network management provider, a management service provider (management service provider, MnS provider), an intent provider (intent provider), an intent handler (intent handler), a network management service production network element, an intent management service provider (intent management service provider), an intent service provider, a network management service producer, or the like. In a future communication system, the network management service producer entity may further have another name. This is not particularly limited in this application. For ease of description, the network management service producer entity is referred to as a producer entity for short below.

A capability or a function of the producer entity may be deployed on a network element, and the network element is referred to as a network management service production network element. Alternatively, a capability or a function of the producer entity may be deployed on another device. This is not limited in embodiments of this application. For ease of description, in embodiments of this application, the producer entity is used as an example for description, but may be replaced with another device on which the capability or the function of the producer entity is deployed.

The consumer entity and/or the producer entity may be a management function, a management function entity, a management entity, a network equipment, a network element, or the like. This is not limited in this application.

The foregoing entity may be a network element in a hardware device, a software function running on dedicated hardware, or a virtualization function instantiated on a platform (for example, a cloud platform). It may be understood that the foregoing entity may be implemented by one device, or may be implemented by a plurality of devices together. In addition, the foregoing entity may be a functional module in a system, for example, a network management system (network management system, NMS) or an equipment management system (equipment management system, EMS), or the foregoing entity may be a functional module in a device, for example, one or more functional modules in a network equipment (network equipment, NE). The network equipment may be an access network equipment, a core network equipment, or the like.

In an example, the consumer entity may be deployed in the NMS, the producer entity may be deployed in different EMSs, and information interaction between the consumer entity and the producer entity may be performed through an interface between the NMS and the EMS.

In another example, the consumer entity may be deployed in the EMS, the producer entity may be deployed in different NEs, and information interaction between the consumer entity and the producer entity may be performed through an interface between the EMS and the NE.

The solutions of this application may be further applied to another system including a corresponding entity. This is not limited in this application.

FIG. 4 is another diagram of a structure of a system architecture to which an embodiment of this application is applicable.

The system architecture shown in FIG. 4 includes a consumer entity, a producer entity, and a large model.

The large model may be deployed in the consumer entity as shown in FIG. 4, or may be deployed outside the consumer entity (for example, deployed on a cloud platform). This is not limited. The consumer entity may include a large model application framework. The large model application framework may include units such as a prompt generator (prompt generator), a memory (memory), and an intent tool (intent tool). The prompt generator may include a prompt scheduler, an intent prompt assembly module, and the like. The large model application framework in the consumer entity can process a northbound natural language, identify intent content, instruct the large model to generate a proper structured intent and API call instruction, and send the received structured intent and API call instruction to the producer entity. Specifically, the large model application framework may be configured to: determine a role type played by the large model, form a prompt instance based on a built-in prompt template, assist a user in interacting with the large model, interact with the producer entity, and the like. The producer entity may include an intent processing function, and may receive and execute the structured intent sent by the consumer entity.

It should be noted that the large model application framework may be replaced with another name, for example, an Al module, an AI agent (AI agent), a prompt unit, or a prompt engine. It should be further noted that the large model application framework may alternatively be deployed at another location, for example, another device or the cloud platform. It should be further noted that a manner of division into the functions or units of the large model application framework shown in FIG. 4 is merely an example, and constitutes no limitation on embodiments of this application.

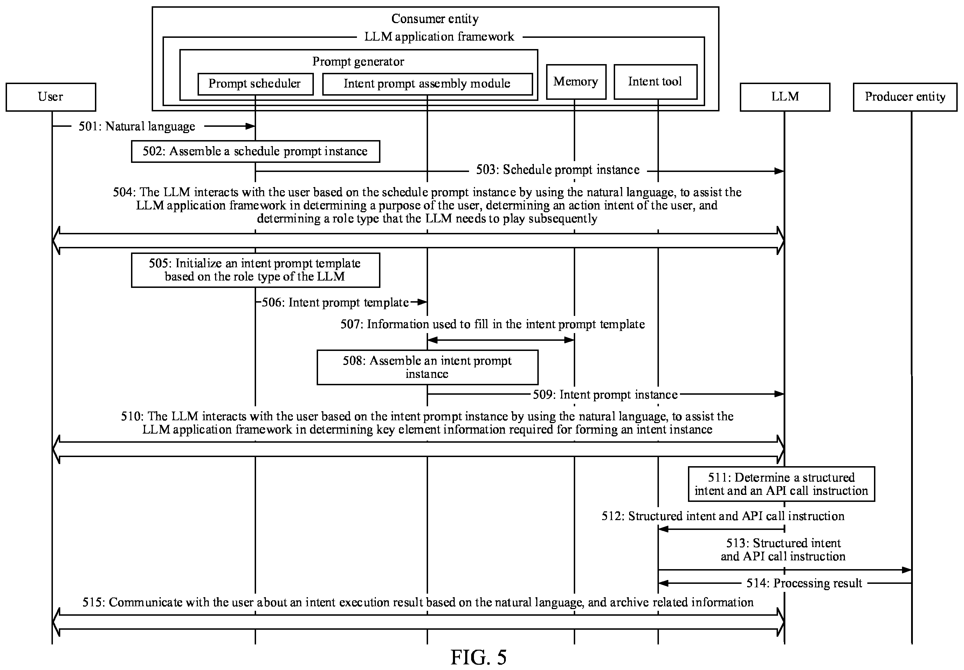

With reference to FIG. 5, the following describes a process in which a large model application framework processes a natural language intent into a structured intent based on a large model.

FIG. 5 is a schematic flowchart of processing a natural language intent into a structured intent based on a large model by a large model application framework.

In FIG. 5, an example in which the large model is an LLM and the LLM is disposed outside a consumer entity is used. The process in which the LLM application framework processes the natural language intent into the structured intent based on the LLM mainly includes two key processes: generating an intent prompt instance (as shown in step 501 to step 509 below), and generating a structured intent and an API call instruction (as shown in step 510 to step 512 below).

Step 501: The LLM application framework receives a natural language sent (or entered) by a user.

For example, the LLM application framework receives "ensure that an average downlink throughput of an area A is not less than 20 Mbps" sent (or entered) by the user.

Step 502: A prompt scheduler in the LLM application framework assembles a schedule prompt instance based on the natural language input by the user and a schedule prompt template (schedule prompt template).

The schedule prompt instance is used to assist or prompt the LLM in communicating with the user, to determine a role type that the LLM needs to play.

Step 503: The LLM application framework sends the schedule prompt instance to the LLM.

Correspondingly, the LLM receives the schedule prompt instance sent by the LLM application framework.

Step 504: The LLM interacts with the user based on the schedule prompt instance by using the natural language, to assist the LLM application framework in determining a purpose of the user, determining an action intent of the user, and determining a role type that the LLM needs to play subsequently.

The role type that the LLM needs to play may include a common chat role (chat role) and/or an intent action role (intent action role), and the like. The intent action role (intent action role) may include at least one of the following: an intent creation role (intent_create role), an intent modification role (intent_modify role), an intent deletion role (intent_delete role), an intent query role (intent_query role), an intent report role, or the like.

The following uses the role type that the LLM needs to play as the intent creation role as an example for description.

It should be noted that the LLM communicates with the user through the LLM application framework because the user is unaware of existence of the LLM.

Step 505: The prompt scheduler in the LLM application framework initializes (or obtains) an intent prompt template based on the role type determined in step 504.

For example, when the role type is the intent creation role, the prompt scheduler in the LLM application framework matches and obtains an intent creation prompt template. An example of the intent creation prompt template is as follows:
*Role: Intent action*
*Target: Intent creation*
*Context:*
   *1. Status information of a producer entity;*
   *2. Intent model description;*
   *3. Intent API description;*
   *4. Intent scenario description;*
*Constraint:*
   *(COT):*
   *Step 1: Determine an intent scenario;*
   *Step 2: Extract key element information of an intent through communication;*
   *Step 3: Generate a structured intent and an example;*
   *Step 4: Generate an API call instruction and an example.*

Step 506: The prompt scheduler in the LLM application framework sends the intent prompt template to an intent prompt assembly module.

Correspondingly, the intent prompt assembly module receives the intent prompt template from the prompt scheduler.

Step 507: The intent prompt assembly module obtains, from a memory, information used to fill in the intent prompt template.

The information used to fill in the intent prompt template may include at least one of the following information: user-customized information, an intent template, intent API information, status information of a producer entity, or intent scenario information. The user-customized information may include a historical dialogue and/or an intent identifier list of the user, and the like. The intent template, the intent API, and the intent scenario may be defined in a standard protocol. For example, the intent template includes at least one of the following templates: an intent creation template, an intent modification template, an intent deletion template, an intent query template, or an intent report template. For example, the intent API includes at least one of the following: an intent creation API, an intent modification API, an intent deletion API, an intent query API, or an intent report API. For example, the intent scenario includes at least one of the following: a service provisioning scenario or a service assurance scenario.

With reference to the example in step 505, the information used to fill in the intent prompt template may include at least one of the following information: status information of a producer entity, an intent template, intent API information, or intent scenario information.

Step 508: The intent prompt assembly module assembles an intent prompt instance based on the obtained information.

With reference to the example in step 505, an example of the intent prompt instance is as follows:

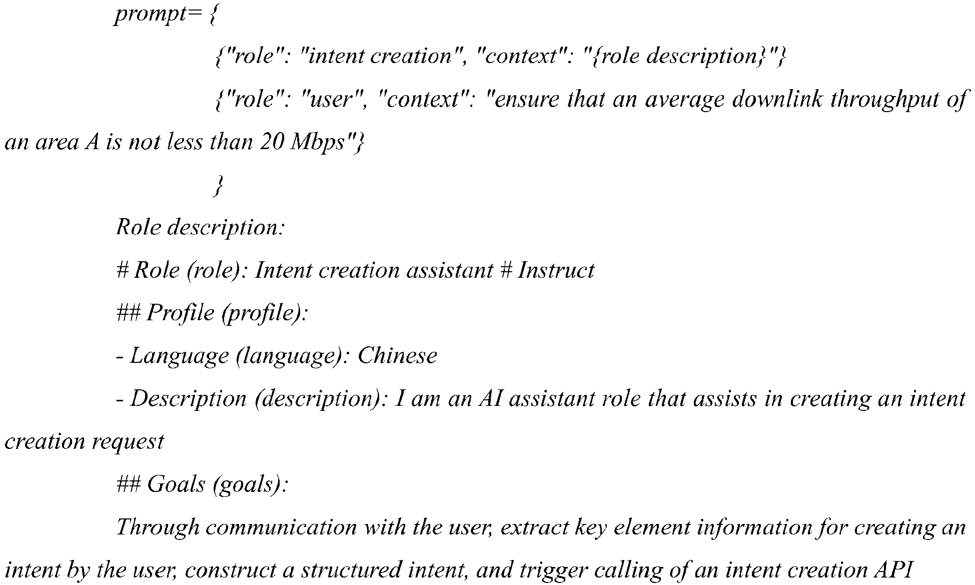

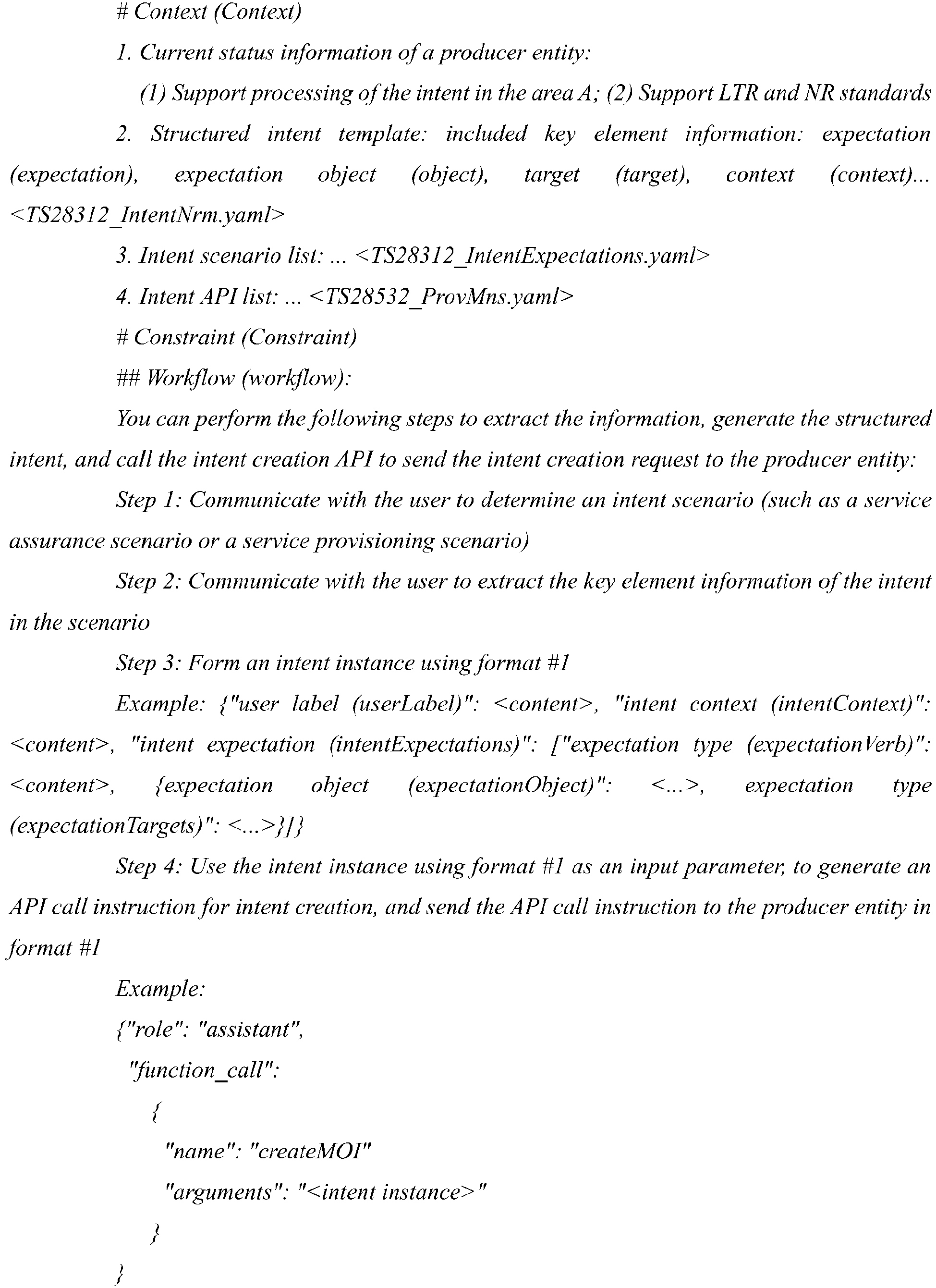

Step 509: The intent prompt assembly module sends the intent prompt instance to the LLM.

Correspondingly, the LLM receives the intent prompt instance from the intent prompt assembly module.

Step 510: The LLM interacts with the user based on the intent prompt instance according to a chain of thought in the intent prompt instance by using the natural language, to assist the LLM application framework in determining key element information required for forming a structured intent.

The key element information may include at least one of the following information: a user label (userLabel), an intent context (intentContext), or an intent expectation (intentExpectations). The intent expectation may include at least one of the following information: an expectation ID (expectationID), an expectation type (expectationVerb), an expectation object (expectationObject), an expectation target (expectationObject), or an expectation context (expectationContext). An intent target may include at least one of the following information: a target type (objectType), a target instance (objectInstance), or a target context (objectContext).

Step 511: The LLM determines a structured intent and an API call instruction based on the key element information.

The intent template and the API information may be provided through the intent prompt instance.

With reference to the examples in step 501 and step 505, an example of the structured intent is as follows:

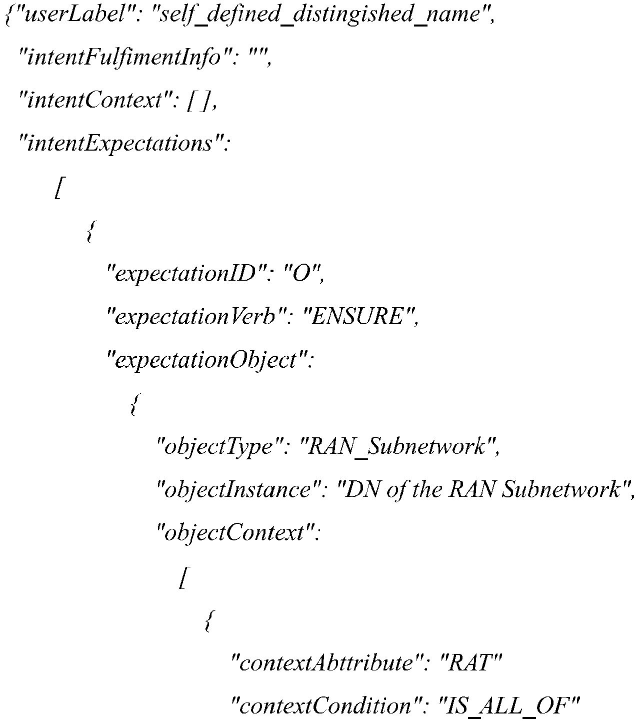

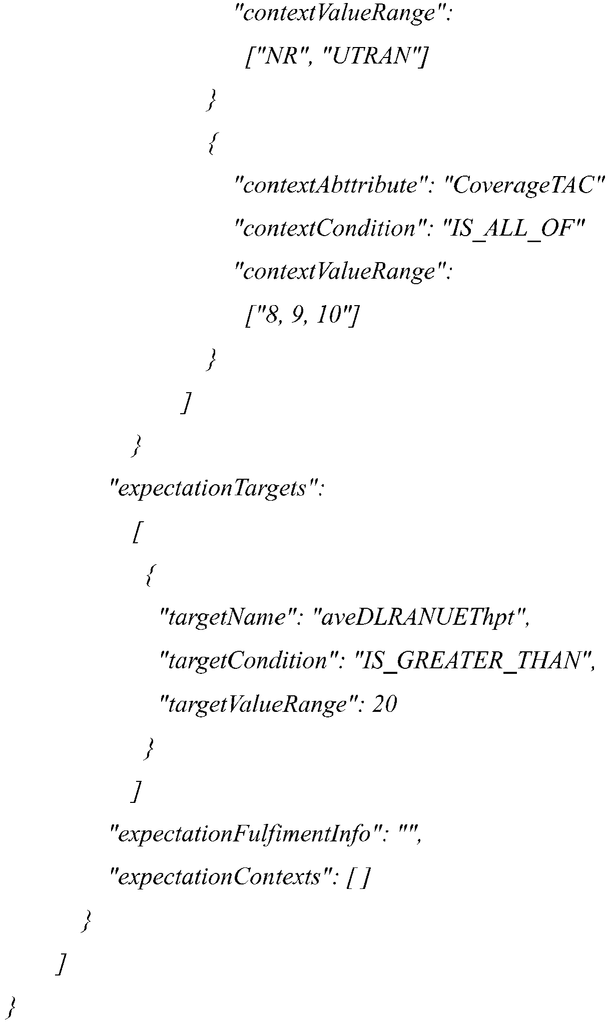

With reference to the examples in step 501 and step 505, an example of the intent API call instruction is as follows, where the intent instance is referenced back to the structured intent described above:

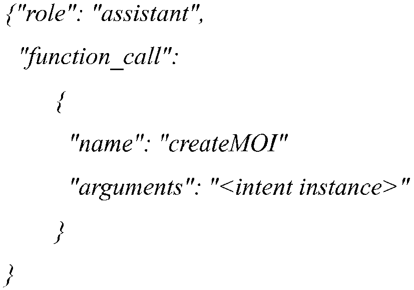

Step 512: The LLM sends the structured intent and the API call instruction to an intent tool in the LLM application framework.

Correspondingly, the intent tool receives the structured intent and the API call instruction from the LLM.

Step 513: The LLM application framework sends the structured intent and the API call instruction to the producer entity by using the intent tool.

Correspondingly, the producer entity receives the structured intent and the API call instruction from the LLM application framework.

Step 514: The producer entity completes intent processing based on the received structured intent and API call instruction, and feeds back an intent processing result to the LLM application framework by using the intent tool in the LLM application framework.

Step 515: The LLM application framework and the LLM communicate with the user about the intent processing result based on the natural language, and archive related information.

In this way, based on the foregoing process, the consumer entity completes a process of converting a natural language intent into a structured intent and a related API call process based on the LLM and the prompt.

It can be learned from the foregoing process that, in a process of processing the natural language intent into the structured intent by the LLM application framework:
(1) The LLM application framework obtains the information used to fill in the intent prompt template from the memory. The information in the memory is statically configured. In this case, the information in the memory may be insufficient to reflect a current situation (for example, the current status of the producer entity).
(2) Although different intent prompt templates correspond to different intent scenarios, the LLM does not have real-time information of a target side (producer entity side). When the producer entity processes the intent based on the corresponding structured intent and intent API call instruction, the intent action may fail because the intent feasibility check fails, affecting action efficiency.

For example, the user delivers a natural language intent "ensure that an average downlink throughput of an area A is not less than 20 Mbps". Based on the process shown in FIG. 5, the LLM generates a structured intent #1 and delivers the structured intent #1 to the producer entity through the consumer entity. Expectation objects of the structured intent #1 include a TAC 8, a TAC 9, and a TAC 10 in the area A, and an expectation target is that an average downlink throughput is not less than 20 Mbps. Actually, a cell of the TAC 9 in the area A has stopped providing a service, the intent #1 conflicts with an intent #2 that has been activated, and a priority of the intent #2 is higher than a priority of the intent #1. In this case, the intent #1 fails to be created because a feasibility check fails.

For the foregoing problem, this application provides an intent management method and a communication apparatus, to reduce a probability of an intent feasibility check failure, thereby improving intent action efficiency, and improving intent management efficiency and user experience.

The following describes the method embodiments of this application.

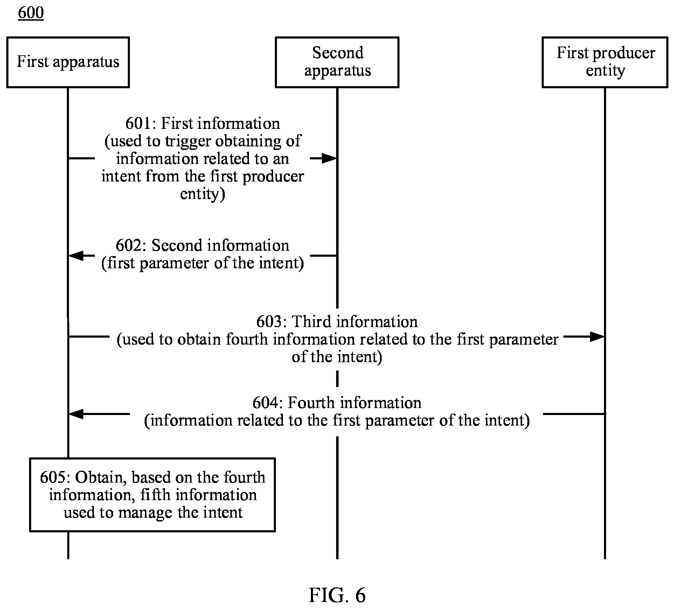

FIG. 6 is a schematic flowchart of an intent management method 600 according to an embodiment of this application.

The method shown in FIG. 6 may be performed by a first apparatus, a second apparatus, and a first producer entity. Unless otherwise specified, the "first apparatus", the "second apparatus", or the "first producer entity" may be the first apparatus, the second apparatus, or the first producer entity, or may be an apparatus that can support the first apparatus, the second apparatus, or the first producer entity in implementing a function of the first apparatus, the second apparatus, or the first producer entity.

The first apparatus is an apparatus on which a large model application framework is deployed or disposed. The second apparatus is an apparatus on which a large model is deployed or disposed. The first apparatus and the second apparatus may be disposed in a same entity, that is, the first apparatus and the second apparatus are modules or logical apparatuses deployed in the same entity. For example, the first apparatus and the second apparatus are different modules in a consumer entity or a second producer entity, respectively. Alternatively, the first apparatus and the second apparatus may be disposed in different entities. For example, the first apparatus is disposed in a consumer entity or a second producer entity, and the second apparatus is disposed in another entity (for example, a third-party cloud platform). This is not limited.

The method 600 includes at least a part of the following content.

Step 601: The first apparatus sends first information to the second apparatus.

Correspondingly, the second apparatus receives the first information from the first apparatus.

The first information may be used to trigger obtaining of information related to an intent from the first producer entity, which may be replaced with that the first information is used to trigger updating of the information related to the intent.

The intent may be intents of various types. A type of the intent may be related to a target included in the intent. For example, an intent including a target related to image processing is an image processing intent. For example, an intent including a target related to network management is a network management intent. For example, the target of the intent includes that a performance indicator reaches a corresponding performance indicator range. When the performance indicator is a throughput indicator, for example, an average downlink throughput is greater than or equal to 5 Mbps, the intent may be referred to as a throughput intent. When the performance indicator is an energy saving indicator, for example, the energy saving indicator is greater than or equal to 10 kilowatts, the intent may be referred to as an energy saving intent.

The information related to the intent may be understood as information related to a parameter of the intent. The parameter of the intent may be each parameter included in an intent template. Using the network management intent as an example, the parameter of the intent may include at least one of the following information: a user label, an intent context, or an intent expectation. The intent expectation may include at least one of the following information: an expectation ID, an expectation type, an expectation object, an expectation target, or an expectation context. An intent target may include at least one of the following information: a target type, a target instance, or a target context.

Specifically, the information related to the parameter of the intent may be information that is stored, obtained, and maintained by the first producer entity. For example, a first parameter of the intent is an area A, and the information related to the parameter of the intent may be a cell in a serving state in the area A that is stored or maintained by the first producer entity. The information related to the parameter of the intent may also be understood as "an attribute of the intent", "an information element of the intent", "a field of the intent", or the like. This is not limited.

Specifically, the information related to the parameter of the intent may include a value or a status value of the parameter of the intent, and/or information about another intent that conflicts with the value of the parameter of the intent. Using the network management intent as an example, the information related to the parameter of the intent may include a value or a status value of a parameter in content such as an "expectation object", an "expectation target", and an "intent context" included in an intent instance, and information about another intent that may conflict with the value of the parameter in the content such as the "expectation object", the "expectation target", and the "intent context" included in the intent instance. For example, for a network management intent "ensure that a handover failure rate of an area A < 2% when a load > 80%", a parameter of the intent may include an expectation type "performance assurance type" and an expectation object "area A", and information related to the intent may be information related to the "performance assurance type" and the "area A". For example, the information related to the "area A" may include two types of information. One is a cell that is still in a serving state in the area A, and the other is information about another intent in the area A (for example, an intent that conflicts with the current intent in the area A, or a priority of the existing intent in the area A). For another example, the information related to the "performance assurance type" may include whether there is an intent of an energy saving type.

An implementation of the first information is not limited in embodiments of this application. For example, the first information includes a first prompt instance, and a chain of thought of the first prompt instance includes a step used to trigger obtaining of the information related to the intent from the first producer entity. In some implementations, the chain of thought of the first prompt instance may further include another step, for example, a step used to trigger the second apparatus to determine an intent scenario, a step used to trigger the second apparatus to determine the parameter of the intent, a step used to trigger the second apparatus to generate a structured intent, or a step used to trigger the second apparatus to generate an API call instruction. It should be noted that the step used to trigger obtaining of the information related to the intent from the first producer entity may be integrated with the another step, or may be a separate step independent of the another step. This is not limited.

It should be noted that, in step 601, the first apparatus prompts, instructs, or triggers, by using the first information, the second apparatus to perform an action of obtaining the information related to the intent from the first producer entity, and specific information obtained from the first producer entity is determined or decided by the second apparatus.

Step 602: The second apparatus sends second information to the first apparatus based on the first information.

Correspondingly, the first apparatus receives the second information from the second apparatus.

Specifically, in step 602, the second apparatus may determine the second information based on the first information, and then send the second information to the first apparatus.

The second information may include the first parameter of the intent. The first parameter may include one or more parameters, and may be a to-be-updated parameter of the intent that is determined or identified by the second apparatus. Values of these parameters in the second apparatus may be different from values stored or maintained by the first producer entity. For example, the second apparatus determines that cells in a serving state in the area A are a TAC 8, a TAC 9, and a TAC 10. Actually, information stored or maintained by the first producer entity is that cells in a serving state in the area A are the TAC 8 and the TAC 9.

Specifically, the first parameter may be all or some parameters of the intent. For example, when the intent is an intent related to network management, the first parameter includes at least one of the following parameters: an expectation object, an expectation target, or an expectation context. For descriptions of the expectation object, the expectation target, and the expectation context, refer to the term description part. Details are not described again. For example, for the network management intent "ensure that a handover failure rate of an area A < 2% when a load > 80%", the cell in the serving state in the area A needs to be updated. Therefore, the first parameter may include the area A.

An implementation in which the second apparatus determines the second information based on the first information is not limited in embodiments of this application. In a possible implementation, the second apparatus may determine the first parameter based on the first information, and determine the second information based on the first parameter. For example, when the first information includes a first prompt instance and a chain of thought of the first prompt instance includes the step used to trigger obtaining of the information related to the intent from the first producer entity, the second apparatus determines the first parameter of the intent in response to the step used to trigger obtaining of the information related to the intent from the first producer entity in the chain of thought of the first prompt instance, and then determines the second information based on the first parameter.

An implementation in which the second apparatus determines the first parameter of the intent is not limited in embodiments of this application.

In a possible implementation, in an intent creation scenario, the first information is further used to trigger the second apparatus to generate the to-be-created structured intent. For example, the chain of thought of the first prompt instance further includes the step of triggering the second apparatus to generate the to-be-created structured intent. The second apparatus may determine the first parameter of the intent based on the first information by interacting with a user through the first apparatus.

In another possible implementation, in a scenario in which the structured intent already exists in the first apparatus (for example, an intent modification scenario, an intent query scenario, or an intent deletion scenario), the first apparatus may read the parameter of the intent from a memory and provide the parameter for the second apparatus by using the first information, and the second apparatus may obtain the parameter of the intent from the first information, and determine the first parameter from the obtained parameter. For example, in the intent modification scenario, the first information includes the first prompt instance, and the chain of thought of the first prompt instance further includes a step of triggering the second apparatus to modify the structured intent. The parameter of the intent may be carried in a context of the first prompt instance, or may be carried in the chain of thought of the first prompt instance. The second apparatus may obtain the parameter of the intent from the first prompt instance, and determine the first parameter from the obtained parameter.

In some other embodiments, the second information may further include API information, where the API information may indicate an API called to obtain fourth information related to the first parameter of the intent. For example, the API information may be an index or a number of the API, or may be an API call instruction. In other words, the second apparatus determines information that needs to be obtained and an API that needs to be called to obtain the information.

Step 603: The first apparatus sends third information to the first producer entity based on the second information.

Correspondingly, the first producer entity receives the third information from the first apparatus.

The third information may be used to obtain the fourth information related to the first parameter of the intent.

For example, the third information includes the first parameter of the intent. For example, the second apparatus may use the first parameter of the intent as an input parameter for calling the API. It should be noted that, when the second information does not include the API information, the second apparatus may determine the API called to obtain the fourth information. When the second information includes the API information, the second apparatus may call the API indicated by the API information to obtain the fourth information, that is, the third information may be used to call the API indicated by the API information to obtain the fourth information. For example, the third information may include the API call instruction, an input parameter of the API call instruction is the first parameter, and the API is the API indicated by the API information. For example, the API is prompt_fetch, and the third information may be as follows:

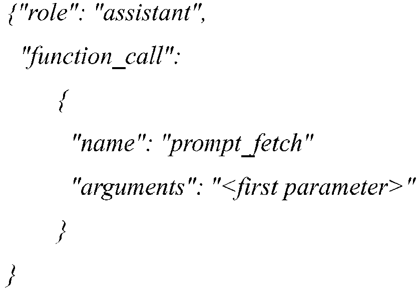

Step 604: The first producer entity sends the fourth information to the first apparatus.

Correspondingly, the first apparatus receives the fourth information from the first producer entity.

The fourth information may indicate information related to the first parameter of the intent. For descriptions of the information related to the first parameter of the intent, refer to the information related to the parameter of the intent in step 601. Details are not described again.

Specifically, after receiving the third information, the first producer entity obtains the information related to the first parameter of the intent through query based on the third information, and indicates the information to the first apparatus by using the fourth information. For example, the first producer entity obtains the information related to the first parameter of the intent through query based on the third information according to a specific policy or depending on an internal decision, and indicates the information to the first apparatus by using the fourth information.

For example, the information that is related to the first parameter of the intent and that is provided by the first producer entity for the first apparatus may be real-time information related to the first parameter of the intent in the first producer entity. For example, the first parameter of the intent is the area A, and the information related to the area A may include: a cell whose TAC is 9 in the area A has stopped providing a service, and/or information about another intent that has been activated in the area A, where the information about the another intent that has been activated in the area A may include a priority of the intent.

Step 605: The first apparatus obtains, based on the fourth information, fifth information used to manage the intent.

For example, the fifth information may be an expression that carries a user intent. For example, the fifth information may be a structured intent defined in a standard protocol.

An implementation in which the first apparatus obtains, based on the fourth information, the fifth information used to manage the intent is not limited in embodiments of this application. In a possible implementation, the first apparatus obtains the fifth information from the second apparatus. For example, the first apparatus sends the fourth information to the second apparatus, and correspondingly, the second apparatus receives the fourth information from the first apparatus; the second apparatus determines the fifth information based on the fourth information and the large model; and the second apparatus sends the fifth information to the first apparatus, and correspondingly, the first apparatus receives the fifth information from the second apparatus.

Based on the method 600, the first apparatus may trigger the second apparatus to obtain the information related to the intent, and then the second apparatus provides the first parameter of the intent for the first apparatus, so that the first apparatus obtains the information related to the first parameter of the intent from the first producer entity, and then obtains, based on the information related to the first parameter of the intent on the first producer entity side, the information used to manage the intent. In this way, in the method 600, the intent may be managed, for example, the intent is created or the intent is modified, based on the real-time information on the first producer entity side. This helps reduce a probability of an intent feasibility check failure, thereby improving intent action efficiency, and improving intent management efficiency and user experience.

In some other embodiments of this application, the method 600 further includes: The first apparatus receives sixth information input by the user, where the sixth information may indicate an action related to the intent; and the first apparatus determines the first information based on the sixth information. For example, the sixth information may be information about a natural language, and the user may enter the sixth information to the first apparatus through a human-computer interaction interface of the first apparatus. In other words, the first apparatus may determine, based on the input information of the user, that the user is performing the action related to the intent, and then determine the first information. When the first information includes the first prompt instance, the first apparatus may determine, based on the natural language input by the user, a role type played by the large model in the second apparatus, and then obtain an intent prompt template based on the role type, to obtain a first intent prompt instance through assembly.

In some other embodiments of this application, the method 600 further includes: The first apparatus manages the intent based on the fifth information used to manage the intent. For example, the first apparatus performs an intent action based on the fifth information. The intent action includes at least one of the following: requesting the first producer entity to create the intent, requesting the first producer entity to modify the intent, requesting the first producer entity to delete the intent, querying the first producer entity for the intent, abandoning creating the intent, or abandoning modifying the intent. When an intent that conflicts with the current intent has been activated in the first producer entity, if the first apparatus still requests, based on the fifth information, the first producer entity to create the current intent or modify the current intent, the first apparatus may further request to delete or suspend the intent that conflicts with the current intent.

In some other embodiments of this application, the method 600 further includes: The first apparatus determines a second prompt instance based on the fourth information, where context information of the second prompt instance includes the fourth information. Step 604 specifically includes: The first apparatus sends the second prompt instance to the second apparatus. In other words, the first apparatus may send the fourth information to the second apparatus by sending the second prompt instance to the second apparatus. It should be noted that the first apparatus may update the context of the first prompt instance based on the fourth information, to obtain the second prompt instance, or may assemble or generate a new second prompt instance based on the fourth information. This is not limited. In embodiments, the second apparatus may determine, based on the second prompt instance and the large model, the fifth information used to manage the intent.

In some other embodiments of this application, a chain of thought of the second prompt instance may include a step used to trigger the second apparatus to generate a management suggestion for the intent based on the fourth information, that is, the first apparatus may prompt, instruct, or trigger the second apparatus to generate the management suggestion for the intent based on the fourth information. Subsequently, the second apparatus may return the management suggestion for the intent. For example, when the second apparatus determines, based on the fourth information, that a value of the first parameter of the intent determined in step 602 is improper, the second apparatus may return the management suggestion for the intent. The second apparatus may alternatively not return the management suggestion for the intent. For example, when the second apparatus determines, based on the fourth information, that a value of the first parameter of the intent determined in step 602 is proper, the second apparatus may directly return the fifth information, but does not return the management suggestion for the intent.

When the second apparatus returns the management suggestion for the intent, the method 600 further includes: The second apparatus generates the management suggestion for the intent based on the second prompt instance; the second apparatus sends seventh information to the first apparatus, and correspondingly, the first apparatus receives the seventh information from the second apparatus, where the seventh information may indicate the management suggestion for the intent; and the first apparatus outputs the seventh information to the user. For example, that the first apparatus outputs the seventh information to the user may be that the first apparatus displays the seventh information to the user through the human-computer interaction interface. In this case, the second apparatus may output the management suggestion for the intent to the user through the first apparatus, so as to help the user deliver correct action information and complete a corresponding intent action, thereby effectively avoiding an incorrect intent action.

For example, the management suggestion may include a result and a cause of an intent action failure, and the cause of the intent action failure may indirectly indicate the management suggestion. For example, the user delivers a natural language intent "ensure that an average downlink throughput of an area A is not less than 20 Mbps", an LLM determines that expectation objects of an intent #1 include a TAC 8, a TAC 9, and a TAC 10 in the area A, and the LLM obtains information related to the area A on the producer entity side by using an LLM application framework, that is, learns that a cell of the TAC 9 in the area A has stopped providing a service, an intent #2 that has been activated in the area A conflicts with the intent #1, and a priority of the intent #2 is higher than a priority of the intent #1. In this case, the management suggestion provided by the LLM for the user by using the LLM application framework may be that the intent #1 fails to be generated because the cell whose TAC is 9 in the area A has stopped providing a service, the intent #2 that has been activated in the area A conflicts with the intent #1, and the priority of the intent #2 is higher.

For example, the management suggestion may include a result, a cause, and a suggestion of an intent action failure. For example, the user delivers a natural language intent "ensure that an average downlink throughput of an area A is not less than 20 Mbps", an LLM determines that expectation objects of an intent #1 include a TAC 8, a TAC 9, and a TAC 10 in the area A, and an LLM obtains information related to the area A on the producer entity side by using an LLM application framework, that is, learns that a cell of the TAC 9 in the area A has stopped providing a service, an intent #2 that has been activated in the area A conflicts with the intent #1, and a priority of the intent #2 is higher than a priority of the intent #1. In this case, the management suggestion provided by the LLM for the user by using the LLM application framework may be that the intent #1 fails to be generated because the cell whose TAC is 9 in the area A has stopped providing a service, the intent #2 that has been activated in the area A conflicts with the intent #1, and the priority of the intent #2 is higher, and it is suggested to re-specify a target area of the intent #1 and/or increase the priority of the intent #1.

In some other embodiments of this application, the method 600 further includes: The first apparatus receives eighth information input by the user, and sends the eighth information to the second apparatus. Correspondingly, the second apparatus receives the eighth information from the first apparatus, where the eighth information is feedback information of the user for the management suggestion. For example, the feedback information may indicate whether the user receives the management suggestion of the second apparatus or indicate an intent action re-delivered based on the management suggestion. For example, the user may enter the eighth information to the first apparatus through the human-computer interaction interface of the first apparatus. In this case, the second apparatus may determine, based on the second prompt instance, the large model, and the eighth information, the fifth information used to manage the intent. Based on embodiments, the second apparatus may provide, for the first apparatus, more proper information used to manage the intent, so as to help improve intent action efficiency, thereby improving intent management efficiency and user experience.

The following describes the method 600 in detail by using an example in which the large model is an LLM and the applicable scenario is an intent creation scenario.

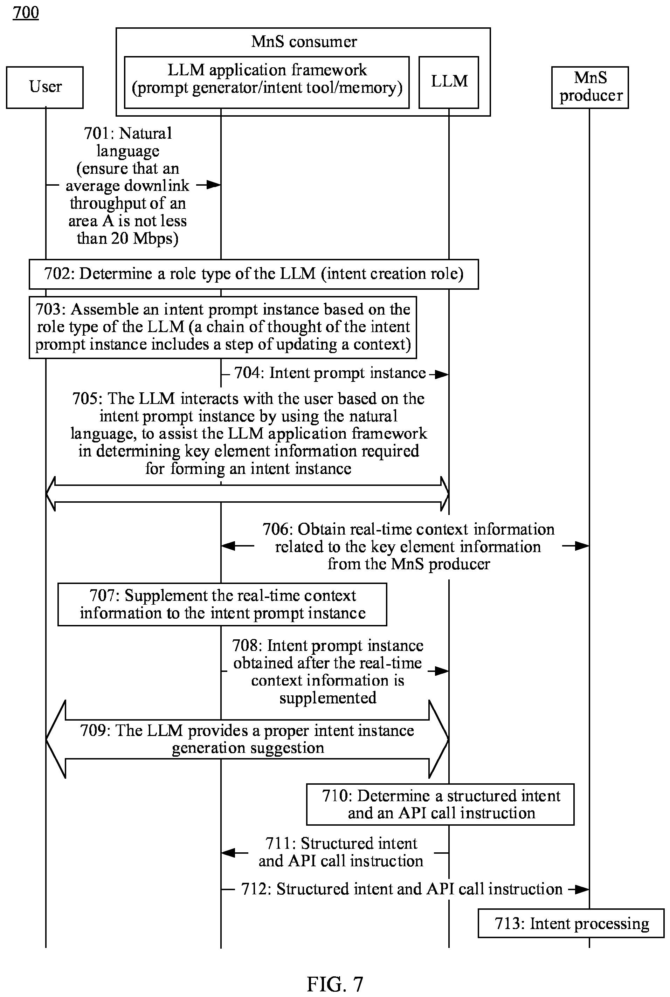

FIG. 7 is a schematic flowchart of an intent management method 700 according to an embodiment of this application. In the method 700, an MnS consumer and an MnS producer respectively correspond to the foregoing consumer entity and first producer entity, an LLM application framework and an LLM respectively correspond to the foregoing first apparatus and second apparatus, an intent prompt instance may correspond to the foregoing first information or first prompt instance, key element information may correspond to the foregoing first parameter, and an intent prompt instance obtained after real-time context information is supplemented may correspond to the foregoing fourth information or second prompt instance. In FIG. 7, an example in which the LLM application framework and the LLM are disposed in the consumer entity is used.

Step 701: The LLM application framework in the MnS consumer receives a natural language input by a user.

For example, the natural language input by the user is "ensure that an average downlink throughput of an area A is not less than 20 Mbps".

Step 702: The MnS consumer determines a role type of the LLM.

In the method 700, the role type of the LLM is an intent creation role.

For an implementation of step 702, refer to step 502 to step 504 in FIG. 5. Details are not described again.

Step 703: Assemble an intent prompt instance based on the role type of the LLM.

For an implementation of step 703, refer to step 505 to step 508 in FIG. 5. Different from FIG. 5, a chain of thought of the intent prompt instance in step 703 includes a step of updating a prompt context.

For example, an example of the intent prompt instance in step 703 is as follows:

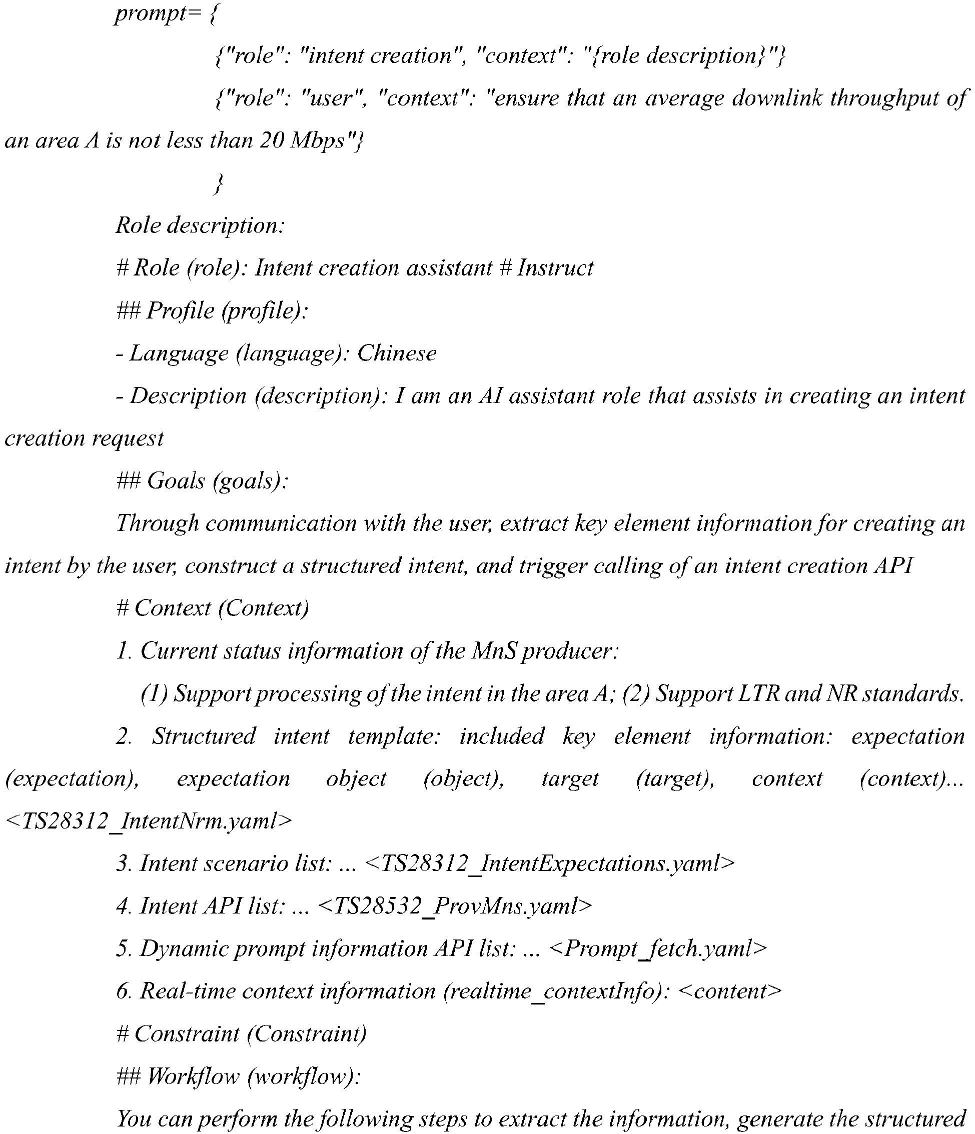

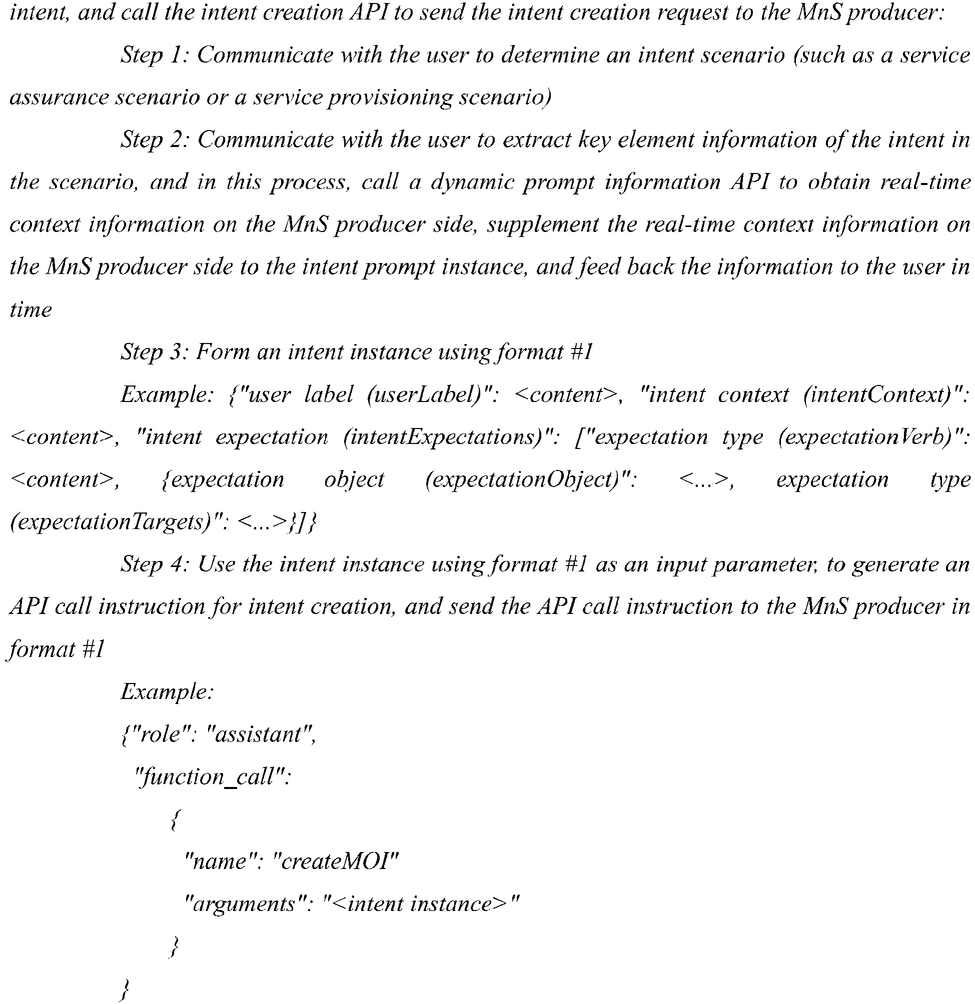

In the foregoing example, the context of the intent prompt instance includes the dynamic prompt information API list and the real-time context information. The API in the dynamic prompt information API list is used to obtain the real-time context information on the MnS producer side, and the real-time context information may be context information related to the key element information on the MnS producer side. The step of updating the prompt context is defined as shown in step 2. To be specific, in a process of extracting the key element information of the intent, the dynamic prompt information API is called to obtain the real-time context information on the MnS producer side, supplement the real-time context information on the MnS producer side to the intent prompt instance, and feed back the information to the user in time.

Step 704: The LLM application framework sends the intent prompt instance to the LLM.

Correspondingly, the LLM receives the intent prompt instance from the LLM application framework.

Step 705: The LLM interacts with the user based on the intent prompt instance according to a chain of thought in the intent prompt instance by using the natural language, to assist the LLM application framework in determining key element information required for forming a structured intent.

For an implementation of step 705, refer to step 510 in FIG. 5.

Step 706: The LLM obtains the real-time context information related to the key element information from the MnS producer by using the LLM application framework.

Specifically, after determining the key element information required for forming the structured intent, the LLM may call an API (that is, the dynamic prompt information API of the MnS producer) in the prompt information API list based on the intent prompt instance by using the LLM application framework, to obtain the real-time context information related to the key element information.

For example, the LLM application framework may call the API in the prompt information API list in a process of determining the key element information, to obtain the real-time context information related to the key element information. For example, in a process of determining the "expectation object (expectationObject)", the real-time context information obtained by the MnS consumer from the MnS producer by calling the API in the prompt information API list includes:
(1) a cell whose TAC is 9 in the area A managed by the MnS producer has stopped providing a service; and/or
(2) information about another intent that has been activated in the area A.

The information about the another intent that has been activated in the area A includes a priority of the intent. For example, an energy saving intent of an intent #2 in the MnS producer has been activated: ... "expectation object": <area A>, "priority": <2>...

For example, the real-time context information related to the key element information may be carried in a Realtime_ContextInfo information element.

Step 707: The LLM application framework supplements the obtained real-time context information to the intent prompt instance.

For example, the LLM application framework may supplement the following information to *"real-time context information (realtime*_*contextInfo)*: *<content>"* in the intent prompt instance:
(1) a cell whose TAC is 9 in the area A managed by the MnS producer has stopped providing a service; and/or
(2) information about another intent that has been activated in the area A managed by the MnS producer.

Step 708: The LLM application framework sends, to the LLM, an intent prompt instance obtained after the real-time context information is supplemented.

Step 709: The LLM interacts with the user by using the natural language based on the intent prompt instance obtained after the real-time context information is supplemented, and provides a proper intent instance generation suggestion for the user, to avoid improper parameter setting that can only be discovered later.

For example, the intent instance generation suggestion may include: the cell whose TAC is 9 in the area A cannot respond to the intent, and target area information of the intent needs to be re-specified; and/or the energy saving intent of the intent #2 has been activated, the intent #2 conflicts with a to-be-created intent #1, and a priority of the intent #2 is higher and a priority of the intent #1 needs to be increased.

Step 705 to step 709 may be performed cyclically.

Step 710: After interacting with the user, the LLM determines a structured intent and an API call instruction.

Step 711: The LLM sends the structured intent and the API call instruction to the LLM application framework.

Correspondingly, the LLM application framework receives the structured intent and the API call instruction from the LLM.

Step 712: The LLM application framework sends the structured intent and the API call instruction to the MnS producer.

Correspondingly, the MnS producer receives the structured intent and the API call instruction from the LLM application framework.

For implementations of step 710 to step 712, refer to step 511 to step 513 in FIG. 5.

Step 713: The MnS producer completes intent processing based on the received structured intent and API call instruction.

The intent processing may include creating and configuring an intent managed object instance (managed object instance, MOI), and executing the intent.

In the method 700, the step of updating the prompt context is added to the chain of thought of the intent prompt instance, so that the intent prompt instance obtained through assembly can instruct the LLM to call the API of the MnS producer, to obtain the real-time context information on the MnS producer side and dynamically update the context information in the intent prompt instance, thereby helping the user deliver correct intent creation information and complete a corresponding intent creation action. In this way, an incorrect intent creation action can be effectively avoided, thereby improving a probability of successful intent creation.

The following describes the method 600 in detail by using an example in which the large model is an LLM and the applicable scenario is an intent modification scenario.

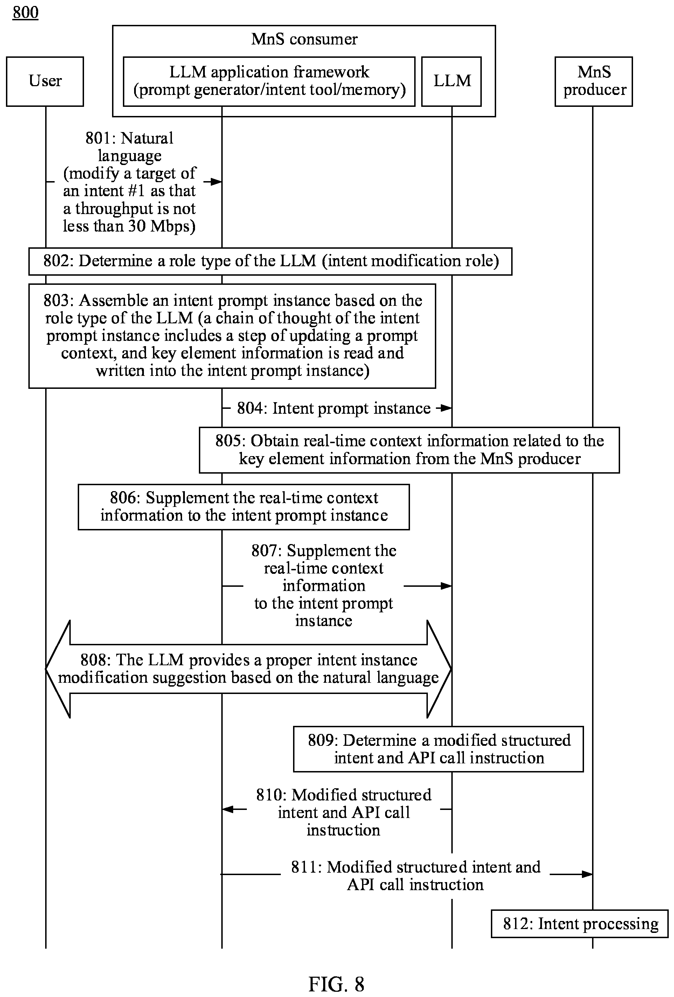

FIG. 8 is a schematic flowchart of an intent management method 800 according to an embodiment of this application. In the method 800, an MnS consumer and an MnS producer respectively correspond to the foregoing consumer entity and first producer entity, an LLM application framework and an LLM respectively correspond to the foregoing first apparatus and second apparatus, an intent prompt instance may correspond to the foregoing first information or first prompt instance, key element information may correspond to the foregoing first parameter, and an intent prompt instance obtained after real-time context information is supplemented may correspond to the foregoing fourth information or second prompt instance. In FIG. 8, an example in which the LLM application framework and the LLM are disposed in the consumer entity is used.

Step 801: The LLM application framework in the MnS consumer receives a natural language input by a user.

For example, the natural language input by the user is "modify a target of an intent #1 as that a throughput is not less than 30 Mbps".

Step 802: The MnS consumer entity determines a role type of the LLM.

In the method 800, the role type of the LLM is an intent modification role.

For an implementation of step 802, refer to step 502 to step 504 in FIG. 5. Details are not described again.

Step 803: Assemble an intent prompt instance based on the role type of the LLM.

For an implementation of step 803, refer to step 505 to step 508 in FIG. 5. Different from FIG. 5, a chain of thought of the intent prompt instance in step 803 includes a step of updating a prompt context. In addition, because the intent instance has been created, key element information of the intent may be directly read (for example, read from a memory of the LLM application framework) and written into the intent prompt instance. The step of updating the prompt context may be defined as: using the key element information of the intent as an input parameter to call a dynamic prompt information API to obtain real-time context information on the MnS producer side, supplement the real-time context information on the MnS producer side to the intent prompt instance, and feed back the information to the user in time. The read key element information may be written to a context of the intent prompt instance or the chain of thought of the intent prompt instance. This is not limited.

Step 804: The LLM application framework sends the intent prompt instance to the LLM.

Correspondingly, the LLM receives the intent prompt instance from the LLM application framework.

Step 805: The LLM uses the key element information of the intent as the input parameter based on the intent prompt instance according to the chain of thought in the intent prompt instance, to call the dynamic prompt information API by using the LLM application framework to obtain the real-time context information on the MnS producer side.

For example, the real-time context information related to the key element information may be carried in a Realtime_ContextInfo information element.

Step 806: The LLM application framework supplements the obtained real-time context information to the intent prompt instance.

Step 807: The LLM application framework sends, to the LLM, an intent prompt instance obtained after the real-time context information is supplemented.

Step 808: The LLM interacts with the user by using the natural language based on the intent prompt instance obtained after the real-time context information is supplemented, and provides a proper intent instance modification suggestion for the user, to avoid improper parameter setting that can only be discovered later.

Step 809: After interacting with the user, the LLM determines a modified structured intent and API call instruction.

Step 810: The LLM sends the modified structured intent and API call instruction to the LLM application framework.

Correspondingly, the LLM application framework receives the modified structured intent and API call instruction from the LLM.

Step 811: The LLM application framework sends the modified structured intent and API call instruction to the MnS producer.

Correspondingly, the MnS producer receives the modified structured intent and API call instruction from the LLM application framework.

For implementations of step 809 to step 811, refer to step 511 to step 513 in FIG. 5.

Step 812: The MnS producer completes intent processing based on the modified structured intent and API call instruction.

The intent processing may include modifying and configuring an intent MOI, and executing a modified intent.

In the method 800, the step of updating the prompt context is added to the chain of thought of the intent prompt instance, so that the intent prompt instance obtained through assembly can instruct the LLM to call the API of the MnS producer, to obtain the real-time context information on the MnS producer side and dynamically update the context information in the intent prompt instance, thereby helping the user deliver correct intent modification information and complete a corresponding intent modification action. In this way, an incorrect intent modification action can be effectively avoided, thereby improving a probability of successful intent modification.

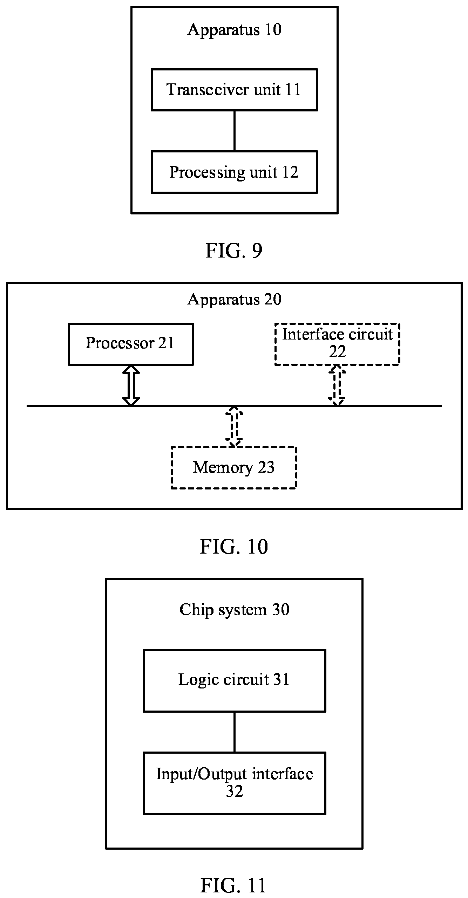

The foregoing describes in detail the method embodiments provided in this application with reference to FIG. 1 to FIG. 8. The following describes apparatus embodiments of this application with reference to FIG. 9 to FIG. 11.

It may be understood that, to implement functions in the foregoing embodiments, apparatuses in FIG. 9 to FIG. 11 each include a corresponding hardware structure and/or software module for performing each function. A person skilled in the art should be easily aware that, in this application, the units and method steps in the examples described with reference to embodiments disclosed in this application can be implemented by hardware or a combination of hardware and computer software.

FIG. 9 and FIG. 10 are diagrams of structures of possible apparatuses according to embodiments of this application. These apparatuses may be configured to implement functions of the first apparatus, the second apparatus, or the first producer entity in the foregoing method embodiments, and therefore can also implement beneficial effects of the foregoing method embodiments.

As shown in FIG. 9, an apparatus 10 includes a transceiver unit 11 and a processing unit 12.

When the apparatus 10 is configured to implement the functions of the first apparatus in the foregoing method embodiments, the transceiver unit 11 is configured to perform sending and receiving steps of the first apparatus, for example, step 601, 602, 603, 604, 701, 704, 706, 708, 711, 712, 801, 804, 807, 810, or 811, and the processing unit 12 is configured to perform a processing step of the first apparatus, for example, step 605, 702, 703, 707, 802, 803, or 806. When the apparatus 10 is configured to implement the functions of the second apparatus in the foregoing method embodiments, the transceiver unit 11 is configured to perform sending and receiving steps of the second apparatus, for example, step 601, 602, 704, 705, 708, 709, 711, 804, 807, 808, or 810, and the processing unit 12 is configured to perform a processing step of the second apparatus, for example, step 702, 710, 802, or 809. When the apparatus 10 is configured to implement the functions of the first producer entity in the foregoing method embodiments, the transceiver unit 11 is configured to perform sending and receiving steps of the first producer entity, for example, step 603, 604, 706, 712, 805, or 811, and the processing unit 12 is configured to perform a processing step of the first producer entity, for example, step 713 or 812.

For more detailed descriptions of the transceiver unit 11 and the processing unit 12, refer to the related descriptions in the foregoing method embodiments. Details are not described herein again.

As shown in FIG. 10, an apparatus 20 includes a processor 21. The processor 21 is coupled to a memory 23. The memory 23 is configured to store instructions. When the apparatus 20 is configured to implement the foregoing methods, the processor 21 is configured to execute the instructions in the memory 23, to implement functions of the foregoing processing unit 12.

Optionally, the apparatus 20 further includes the memory 23.

Optionally, the apparatus 20 further includes an interface circuit 22. The processor 21 and the interface circuit 22 are coupled to each other. It may be understood that the interface circuit 22 may be a transceiver or an input/output interface. When the apparatus 20 is configured to implement the foregoing methods, the processor 21 is configured to execute the instructions to implement functions of the foregoing processing unit 12, and the interface circuit 22 is configured to implement functions of the foregoing transceiver unit 11.

For example, when the apparatus 20 is a chip used in the first apparatus, the second apparatus, or the first producer entity, the chip implements functions of the first apparatus, the second apparatus, or the first producer entity in the foregoing method embodiments. The chip receives information from another module (such as a radio frequency module or an antenna) in the first apparatus, the second apparatus, or the first producer entity, where the information is sent by the another apparatus to the first apparatus, the second apparatus, or the first producer entity; or the chip sends information to another module (such as a radio frequency module or an antenna) in the first apparatus, the second apparatus, or the first producer entity, where the information is sent by the first apparatus, the second apparatus, or the first producer entity to the another apparatus.

FIG. 11 is a diagram of a chip system 30 according to an embodiment of this application. The chip system 30 (or referred to as a processing system) includes a logic circuit 31 and an input/output interface (input/output interface) 32.

The logic circuit 31 may be a processing circuit in the chip system 30. The logic circuit 31 may be coupled and connected to a storage unit, and invoke instructions in the storage unit, to enable the chip system 30 to implement the methods and functions in embodiments of this application. The input/output interface 32 may be an input/output circuit in the chip system 30, and outputs information processed by the chip system 30, or inputs to-be-processed data or signaling information to the chip system 30 for processing.

In a solution, the chip system 30 is configured to implement operations performed by the first apparatus, the second apparatus, or the first producer entity in the foregoing method embodiments.

For example, the logic circuit 31 is configured to implement a processing-related operation performed by the first apparatus, the second apparatus, or the first producer entity in the foregoing method embodiments; and the input/output interface 32 is configured to implement a sending-and/or receiving-related operation performed by the first apparatus, the second apparatus, or the first producer entity in the foregoing method embodiments.

This application further provides a communication apparatus, including a processor. The processor is coupled to a memory. The memory is configured to store a computer program or instructions and/or data. The processor is configured to: execute the computer program or the instructions stored in the memory, or read the data stored in the memory, to perform the method in the foregoing method embodiments. Optionally, there are one or more processors. Optionally, the communication apparatus includes the memory. Optionally, there are one or more memories. Optionally, the memory and the processor are integrated together or disposed separately.

This application further provides a chip, including a processor. The processor is coupled to a memory. The memory is configured to store a computer program or instructions, and the processor is configured to execute the computer program or the instructions stored in the memory, to implement the methods performed by the first apparatus, the second apparatus, or the first producer entity in the foregoing method embodiments.

This application further provides a computer-readable storage medium. The computer-readable storage medium stores computer instructions used to implement the methods performed by the first apparatus, the second apparatus, or the first producer entity in the foregoing method embodiments.

This application further provides a computer program product, including a computer program or instructions. When the computer program or the instructions are executed by a computer, the methods performed by the first apparatus, the second apparatus, or the first producer entity in the foregoing method embodiments are implemented.

This application further provides a communication system. The communication system includes at least one of the first apparatus, the second apparatus, or the first producer entity in the foregoing method embodiments.

For explanations and beneficial effects of related content in any one of the apparatuses provided above, refer to the corresponding method embodiment provided above. Details are not described herein again.

It may be understood that, the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general purpose processor may be a microprocessor or any regular processor or the like.

The method steps in embodiments of this application may be implemented in a hardware manner, or may be implemented in a manner of executing software instructions by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a compact disc read-only memory (compact disc read-only memory, CD-ROM), or any other form of storage medium well-known in the art. For example, a storage medium is coupled to a processor, so that the processor can read information from the storage medium and write information into the storage medium. Certainly, the storage medium may be a component of the processor. The processor and the storage medium may be disposed in an ASIC. In addition, the ASIC may be located in the first apparatus, the second apparatus, or the first producer entity. Certainly, the processor and the storage medium may exist in the first apparatus, the second apparatus, or the first producer entity as discrete components.

All or some of the foregoing embodiments may be implemented by using software, hardware, firmware, or any combination thereof. When software is used to implement the foregoing embodiments, all or a part of the foregoing embodiments may be implemented in a form of a computer program product. The computer program product includes one or more computer programs or instructions. When the computer programs or the instructions are loaded and executed on a computer, the procedures or functions in embodiments of this application are all or partially executed. The computer may be a general-purpose computer, a dedicated computer, a computer network, a network equipment, a user equipment, or another programmable apparatus. The computer program or instructions may be stored in a computer-readable storage medium, or may be transmitted from a computer-readable storage medium to another computer-readable storage medium. For example, the computer program or instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive.

In embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

Unless otherwise stated, meanings of all technical and scientific terms used in embodiments of this application are the same as those usually understood by a person skilled in the technical field of this application. The terms used in this application are merely intended to describe objectives of the specific embodiments, and are not intended to limit the scope of this application. It should be understood that the foregoing description is an example for description, and the foregoing examples are merely intended to help a person skilled in the art understand embodiments of this application, but are not intended to limit embodiments of this application to examples of specific values or specific scenarios. It is clear that a person skilled in the art can make various equivalent modifications or variations based on the examples described above, and such modifications and variations also fall within the scope of embodiments of this application.

## Claims

1. An intent management method, wherein the method comprises:
sending, by a first apparatus, first information to a second apparatus, wherein the first information is used to trigger obtaining of information related to an intent from a first producer entity;
receiving, by the first apparatus, second information from the second apparatus, wherein the second information comprises a first parameter of the intent;
sending, by the first apparatus, third information to the first producer entity based on the second information, wherein the third information is used to obtain fourth information related to the first parameter;
receiving, by the first apparatus, the fourth information from the first producer entity; and
obtaining, by the first apparatus based on the fourth information, fifth information used to manage the intent.

2. The method according to claim 1, wherein the method further comprises:
receiving, by the first apparatus, sixth information input by a user, wherein the sixth information indicates an action related to the intent; and
determining, by the first apparatus, the first information based on the sixth information.

3. The method according to claim 1 or 2, wherein
the first information comprises a first prompt prompt instance, and a chain of thought of the first prompt instance comprises a step used to trigger obtaining of the information related to the intent from the first producer entity.

4. The method according to any one of claims 1 to 3, wherein
the second information further comprises application programming interface API information, and the API information indicates an API called to obtain the fourth information; and
the third information is used to call the API to obtain the fourth information.

5. The method according to any one of claims 1 to 4, wherein
obtaining, by the first apparatus based on the fourth information, the fifth information used to manage the intent comprises: sending, by the first apparatus, the fourth information to the second apparatus; and receiving, by the first apparatus, the fifth information from the second apparatus, wherein the fifth information is used to manage the intent, and the fifth information is determined based on the fourth information; and
the method further comprises: managing, by the first apparatus, the intent based on the fifth information.

6. The method according to claim 5, wherein managing, by the first apparatus, the intent based on the fifth information comprises:
performing, by the first apparatus, an intent action based on the fifth information, wherein the intent action comprises at least one of the following: requesting the first producer entity to create the intent, requesting the first producer entity to modify the intent, requesting the first producer entity to delete the intent, querying the first producer entity for the intent, abandoning creating the intent, or abandoning modifying the intent.

7. The method according to claim 5 or 6, wherein
the method further comprises: determining, by the first apparatus, a second prompt prompt instance based on the fourth information, wherein context information of the second prompt instance comprises the fourth information; and
sending, by the first apparatus, the fourth information to the second apparatus comprises: sending, by the first apparatus, the second prompt instance to the second apparatus.

8. The method according to claim 7, wherein
a chain of thought of the second prompt instance comprises a step used to trigger the second apparatus to generate a management suggestion for the intent based on the fourth information.

9. The method according to claim 8, wherein the method further comprises:
receiving, by the first apparatus, seventh information from the second apparatus, and outputting the seventh information to the user, wherein the seventh information indicates the management suggestion.

10. The method according to claim 9, wherein the method further comprises:
receiving, by the first apparatus, eighth information input by the user, and sending the eighth information to the second apparatus, wherein the eighth information is feedback information of the user for the management suggestion.

11. The method according to any one of claims 1 to 10, wherein
the first information is further used to trigger the second apparatus to modify the intent, and the first information comprises the first parameter.

12. The method according to any one of claims 1 to 11, wherein
the first apparatus is disposed on a consumer entity or a second producer entity, and the second apparatus is disposed on another entity; or
the first apparatus and the second apparatus are disposed on a consumer entity.

13. The method according to any one of claims 1 to 12, wherein
the intent is an intent related to network management, and the first parameter comprises at least one of the following parameters: an expectation object, an expectation target, or an expectation context.

14. The method according to any one of claims 1 to 13, wherein the method further comprises:
receiving, by the second apparatus, the first information from the first apparatus; and
sending, by the second apparatus, the second information to the first apparatus based on the first information.

15. An intent management method, wherein the method comprises:
receiving, by a second apparatus, first information from a first apparatus, wherein the first information is used to trigger obtaining of information related to an intent from a first producer entity; and
sending, by the second apparatus, second information to the first apparatus based on the first information, wherein the second information comprises a first parameter of the intent.

16. The method according to claim 15, wherein
the first information comprises a first prompt prompt instance, and a chain of thought of the first prompt instance comprises a step used to trigger obtaining of the information related to the intent from the first producer entity.

17. The method according to claim 15 or 16, wherein
the second information further comprises application programming interface API information, and the API information indicates an API called to obtain fourth information related to the first parameter.

18. The method according to any one of claims 15 to 17, wherein the method further comprises:
receiving, by the second apparatus, the fourth information related to the first parameter from the first apparatus;
determining, by the second apparatus based on the fourth information and a large model, fifth information used to manage the intent; and
sending, by the second apparatus, the fifth information to the first apparatus.

19. The method according to claim 18, wherein
receiving, by the second apparatus, the fourth information related to the first parameter from the first apparatus comprises: receiving, by the second apparatus, a second prompt prompt instance from the first apparatus, wherein a context of the second prompt instance comprises the fourth information; and
determining, by the second apparatus based on the fourth information and the large model, the fifth information used to manage the intent comprises: determining, by the second apparatus, the fifth information based on the second prompt instance and the large model.

20. The method according to claim 19, wherein
a chain of thought of the second prompt instance comprises a step used to trigger the second apparatus to generate a management suggestion for the intent based on the fourth information.

21. The method according to claim 20, wherein the method further comprises:
generating, by the second apparatus, the management suggestion based on the second prompt instance; and
sending, by the second apparatus, seventh information to the first apparatus, wherein the seventh information indicates the management suggestion.

22. The method according to claim 21, wherein
the method further comprises: receiving, by the second apparatus, eighth information from the first apparatus, wherein the eighth information is feedback information of a user for the management suggestion; and
determining, by the second apparatus, the fifth information based on the second prompt instance and the large model comprises: determining, by the second apparatus, the fifth information based on the second prompt instance, the large model, and the eighth information.

23. The method according to any one of claims 15 to 22, wherein the first information is further used to trigger the second apparatus to modify the intent, the first information comprises the first parameter, and sending, by the second apparatus, the second information to the first apparatus based on the first information comprises:
obtaining, by the second apparatus, the first parameter from the first information; and
sending, by the second apparatus, the second information to the first apparatus based on the first parameter.

24. The method according to any one of claims 15 to 22, wherein sending, by the second apparatus, the second information to the first apparatus based on the first information comprises:
determining, by the second apparatus, the first parameter based on the first information by interacting with the user through the first apparatus; and
sending, by the second apparatus, the second information to the first apparatus based on the first parameter.

25. The method according to any one of claims 15 to 24, wherein
the first apparatus is disposed on a consumer entity or a second producer entity, and the second apparatus is disposed on another entity; or
the first apparatus and the second apparatus are disposed on a consumer entity.

26. The method according to any one of claims 15 to 24, wherein
the intent is an intent related to network management, and the first parameter comprises at least one of the following parameters: an expectation object, an expectation target, or an expectation context.

27. An intent management method, wherein the method comprises:
receiving, by a first producer entity, third information, wherein the third information is used to obtain fourth information related to a first parameter of an intent; and
sending, by the first producer entity, the fourth information.

28. The method according to claim 27, wherein
the intent is an intent related to network management, and the first parameter comprises at least one of the following parameters: an expectation object, an expectation target, or an expectation context.

29. An intent management method, wherein the method comprises:
sending, by a first apparatus, first information, and receiving, by a second apparatus, the first information, wherein the first information is used to trigger obtaining of information related to an intent from a first producer entity;
sending, by the second apparatus, second information based on the first information, and receiving, by the first apparatus, the second information, wherein the second information comprises a first parameter of the intent;
sending, by the first apparatus, third information based on the second information, and receiving, by the first producer entity, the third information, wherein the third information is used to obtain fourth information related to the first parameter;
sending, by the first producer entity, the fourth information, and receiving, by the first apparatus, the fourth information; and
obtaining, by the first apparatus based on the fourth information, fifth information used to manage the intent.

30. A communication apparatus, wherein the apparatus comprises a module or a unit configured to implement the method according to any one of claims 1 to 29.

31. A communication apparatus, comprising a processor and an interface circuit, wherein the interface circuit is configured to: receive a signal from a communication apparatus other than the communication apparatus and transmit the signal to the processor, or send a signal from the processor to a communication apparatus other than the communication apparatus, and the processor is configured to implement the method according to any one of claims 1 to 29 by using a logic circuit or by executing code instructions.

32. The communication apparatus according to claim 31, wherein the communication apparatus is a chip or a chip system.

33. A computer-readable storage medium, wherein the storage medium stores a computer program or instructions, and when the computer program or the instructions are executed by a communication apparatus, the method according to any one of claims 1 to 29 is implemented.

34. A communication system, comprising at least one of the following apparatuses: a communication apparatus configured to perform the method according to any one of claims 1 to 14, a communication apparatus configured to perform the method according to any one of claims 15 to 26, or a communication apparatus configured to perform the method according to claim 27 or 28.

35. A computer program product, comprising a computer program or instructions, wherein when the computer program or the instructions are executed in a computer, the steps of the method according to any one of claims 1 to 29 are implemented.
